# EUROPEAN PATENT APPLICATION

(11) **EP 3 950 745 A1**
(43) Date of publication of application: **09.02.2022**
(21) Application number: 20782846.8
(22) Date of filing: 01.04.2020
(51) Int. Cl.: C08F 220/28, C08L 33/04, C09D 133/04, C09D 7/61, C09D 7/63

(54) **AQUEOUS THERMOSETTING RESIN COMPOSITION AND CURED FILM**

(30) Priority: 03.04.2019 WO PCT/JP2019/014839
(71) Applicant: Kyoeisha Chemical Co., Ltd., Osaka-shi, Osaka 541-0054 (JP)
(72) Inventor: MORIWAKI, Yuya, Nara-shi, Nara 630-8453 (JP); ASADA, Kosuke, Nara-shi, Nara 630-8453 (JP); DONKAI, Masaru, Nara-shi, Nara 630-8453 (JP); TAKENAKA, Naomi, Nara-shi, Nara 630-8453 (JP)
(74) Representative: Isarpatent
(86) International application number: PCT/JP2020/015072
(87) International publication number: WO 2020/204091

(57) **Abstract**

An object of the present invention is to obtain an aqueous thermosetting resin composition capable of obtaining satisfactory curing performance by a transesterification reaction between alkyl ester and a hydroxyl group. The aqueous thermosetting resin composition includes a resin component (A) that has -COOR (R is an alkyl group having 50 or less carbon atoms) and a hydroxyl group and a transesterification catalyst (B).

## Description

### Technical Field

The present invention relates to an aqueous thermosetting resin composition using a transesterification reaction, which uses a transesterification catalyst, as a curing reaction, and a cured film.

### Background Art

The inventors have studied thermosetting resin compositions using a transesterification reaction as a curing reaction (PTL 1). Through the recent studies, it has become clear that curing performance equivalent to that of curing using generally known melamine resins and polyisocyanate compounds can be secured by using a transesterification reaction as a curing reaction.

Melamine resins and polyisocyanate compounds are widely and generally used because the curing agents have a good thermal reactivity and cured resins obtained have superior characteristics. However, the melamine resin is presumed as the cause of sick house syndrome because it generates formaldehyde, so that it has been restricted in uses. Further, a polyisocyanate compound has high curing reaction performance, but it is considered that it is preferable to found a cheaper curing agent for reasons such as the necessity of blocking for obtaining stability with respect to water for water systemization or a high price of the polyisocyanate compound. Thus, there is a possibility that these problems can be solved by using a transesterification reaction as a curing reaction.

On the other hand, in thermosetting resin compositions such as coating materials and adhesives, making a composition aqueous has been widely studied. This is for the purpose of reducing the burden on an environment by using an organic solvent. In general, in order to make a coating material aqueous, a method of making a coating material aqueous by introducing an acid group such as a carboxylic acid or sulfonic acid into a resin and neutralizing the resin with a basic compound such as ammonia or amine is generally used. However, specific studies for making a thermosetting resin composition, using a transesterification reaction as a curing reaction, aqueous by such a method have not been performed.

PTL 1 described above does not disclose a specific method for making a thermosetting resin composition, using a transesterification reaction as a curing reaction, aqueous.

### Summary of Invention

### Technical Problem

The present invention is contrived in view of the above-mentioned circumstances, and an object thereof is to obtain an aqueous thermosetting resin composition capable of obtaining satisfactory curing performance by a transesterification reaction between alkyl ester and a hydroxyl group.

### Solution to Problems

The present invention relates to an aqueous thermosetting resin composition including a resin component (A) that has -COOR (R is an alkyl group having 50 or less carbon atoms) and a hydroxyl group, and a transesterification catalyst (B).

The above-mentioned resin component may be a component in which a compound (A-1) having two or more -COOR (R is an alkyl group having 50 or less carbon atoms) groups and a compound (A-2) having a hydroxyl group are in the same resin, may be a mixture thereof, or may be a combination thereof.

It is preferable that the above-mentioned resin component have a compound (A-3) having one or more -COOR (R is an alkyl group having 50 or less carbon atoms) groups and one or more hydroxyl groups as a portion or the entirety thereof.

It is preferable that the resin component further include at least one functional group selected from the group consisting of a carboxylic acid group, a sulfonic acid group, a sulfate group, and a phosphate group which are neutralized with amine and/or ammonia.

It is preferable the transesterification catalyst (B) be at least one compound selected from the group consisting of a metal compound containing metals other than alkali metal, and a basic catalyst.

The present invention relates to a cured film which is formed by three-dimensionally crosslinking the thermosetting resin composition.

### Description of Embodiments

Hereinafter, the present invention will be described in detail.

The present invention relates to an aqueous thermosetting resin composition that causes a transesterification reaction between a COOR group and a hydroxyl group in a resin component (A) having -COOR (R is an alkyl group having 50 or less carbon atoms) and the hydroxyl group and cures the resin component.

That is, in the present invention, an ester bond and a hydroxyl group are present in a system, and a transesterification reaction for causing resin curing is caused therebetween.

Such a reaction is the following reaction.

[Chem. 1] R₁-COOR₂+R₃-OH→R₁-COO-R₃+R₂-OH

A crosslinked resin formed by a transesterification reaction has high stability and high performance in acid resistance and the like. Further, the crosslinked resin can also be a low temperature curing composition. From such a viewpoint, the crosslinked resin has a more excellent performance than a melamine curing type resin and an isocyanate curing type resin that have been widely used in the related art. Thus, the crosslinked resin is a resin composition that is likely to be widely used in the fields of coating materials, adhesives, and the like. In addition, when an ester group and a hydroxyl group can be introduced into various resins, the crosslinked resin can be variously applied as a thermosetting resin.

The present invention is characterized in that a curable resin composition based on such a curing reaction is made aqueous. As described above, in the fields of coating materials and adhesives, making the coating materials and the adhesives aqueous has been performed to reduce the burden on an environment. This is to achieve a reduction in VOC by making the coating materials and the adhesives aqueous. It is possible to make a resin composition aqueous and provide a thermosetting resin composition corresponding to such a purpose.

Further, the present invention can also be suitably used as a water-based material of a multilayer coating film formed by wet-on-wet.

In topcoat coating materials for automobile coating materials, it is common to form a coating film by steps of water-based coating → drying → solvent clear coating → heat curing. Among these steps, in the water-based coating step, using a water-based coating material which is a thermosetting resin composition of the present invention is also preferable in that satisfactory curability can be obtained.

For such an aqueous thermosetting resin composition, two methods are generally known as follows.
(a) a method of making a resin aqueous by using a water-soluble or water-dispersible component.
(b) a method of making a resin aqueous by emulsifying a water-insoluble component in water.

Thus, these methods will be described in detail. Meanwhile, among components contained in the aqueous thermosetting resin composition, some components may be made aqueous by the method of (a), and the other components may be made aqueous by the method of (b).

### (a) Method of making resin aqueous by using water-soluble or water-dispersible component

In such a method, a resin is made aqueous by making an organic component for forming a coating film water-soluble or water-dispersible. Using such a method is preferable in that the aqueous thermosetting resin composition can be formed as a coating material composition that does not use a surface active agent.

A resin to be used in the above-mentioned mode of (a) is not particularly limited, and it is possible to use a water-soluble resin having at least one selected from the group consisting of a carboxylic acid group, a sulfonic acid group, a sulfate group, and a phosphate group, and solubilized in water by neutralize the at least one acid group with ammonia and/or an amine compound and converting the neutralized acid group into a hydrophilic group. In addition, a resin using a water-soluble compound to be described in detail below may be used. Among these, the carboxylic acid group is preferable from the viewpoint of a low price and the like.

A resin having the above-mentioned acid group can be obtained by performing a known polymerization reaction using a monomer having these functional groups in at least a portion thereof in an organic solvent. Thereafter, the resin can be neutralized by adding water and amine and/or ammonia and can be made aqueous.

In this manner, in a case where a resin is made aqueous by neutralizing an acid group, an acrylic resin, a polyester resin, and a urethane resin among various resins can be generally used. In order to introduce a functional group having the above-mentioned acidic group into an acrylic resin, it is preferable to perform a polymerization reaction using a polymerizable monomer having an acid group as a portion of a raw material.

In such a method, a material that can be used as a monomer having an acid group is not particularly limited, and a usable monomer can be selected depending on a resin type. Examples of the monomer may include unsaturated group-containing carboxylic acid compounds such as (meth)acrylic acid, maleic acid, crotonic acid, and β-carboxyethyl acrylate, toluenesulfonic acid, 2-acrylamide-2-methylpropanesulfonic acid, 2-methacryloyloxyethyl acid phosphate, and the like.

Further, a material may be used in which an agent that generates a carboxyl group is used as a polymerization initiator or a chain transfer agent, and a carboxyl group is introduced into a molecule by a structure derived from these components. Such an initiator and a chain transfer agent are not particularly limited, and examples thereof may include 4,4'-azobis (4-cyanovaleric acid), disuccinic acid peroxide, 3-mercaptopropionic acid, and the like.

It is more preferable to use a compound represented by the following general formula as a monomer having the above-mentioned acid group. 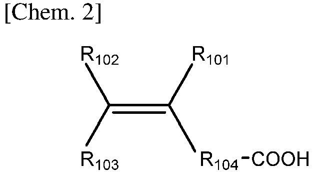 (in the formula, R₁₀₁, R₁₀₂, and R₁₀₃ are the same or different and each is a hydrogen, an alkyl group, a carboxyl group, an alkyl ester group or a structure represented by the following R₁₀₄-COOH. R₁₀₄ is an aliphatic, an alicyclic or an aromatic alkylene group with a number of atoms of 50 or less in the main chain, which may have one or two or more functional groups selected from the group consisting of an ester group, an ether group, an amide group, and a urethane in the main chain, and may have a side chain.)

When the above-mentioned compound is used, there is no adverse effect on a transesterification reaction due to the presence of an acid group, and an aqueous thermosetting resin composition having satisfactory curability can be obtained and thus use thereof is particularly preferable.

It is further preferable that the above-mentioned compound is a derivative of (meth)acrylic acid represented by: 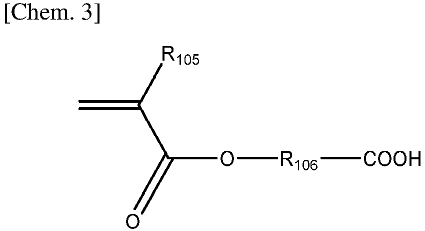 (in the formula, R₁₀₅ is H or a methyl group. R₁₀₆ is an alkylene group with a number of atoms of 48 or less in the main chain, which may have an ester group, an ether group and/or an amide group in the main chain, and may have a side chain.). Specific examples of such a compound may include 2-methacryloyloxyethyl succinic acid, 2-acryloyloxybutyl succinic acid, and the like.

It is preferable that such an acid group in the above-mentioned polymer be introduced so that a resin acid value is in the range of 5 to 200. A lower limit of the above-mentioned acid value is preferably 10 and more preferably 15. An upper limit of the above-mentioned acid value is preferably 120 and more preferably 80. In a case where the acid value is low, it may be difficult to perform dissolution in water even after neutralization. In a case where the acid value is excessively high, viscosity becomes high, which may result in a problem in handleability or the like.

Examples of the above-mentioned amine compound may include tertiary amines such as triethylamine, tributylamine, dimethylethanolamine, and triethanolamine; secondary amines such as diethylamine, dibutylamine, diethanolamine, and morpholine; primary amines such as propylamine, ethanolamine, and dimethylethanolamine; quaternary ammonium such as ammonia, and the like.

The above-mentioned amine compound is not particularly limited, but tertiary amines are preferable. Ammonia is not preferable in terms of yellowing after baking, and primary and secondary amines are not preferable in that reactions with the carboxylic acid occur in parallel.

When the above-mentioned amine compound is used, it is preferable that the amount thereof used be usually in the range of 0.1 to 1.5 mol equivalent to a carboxyl group in the above-mentioned unsaturated carboxylic acid or acid anhydride-modified polyolefin.

When a resin is made aqueous by the above-mentioned method, the resin can be made aqueous by obtaining a resin by a method such as normal solution polymerization and then adding water and an amine compound and stirring the mixture.

### (b) Method of making resin aqueous by emulsifying component in water using emulsifier

Unlike the above-mentioned method, a resin may be made water-soluble by emulsifying the resin using an emulsifier.

In this case, the resin may be a resin obtained by emulsion polymerization, or a resin obtained by emulsification of a resin obtained by solution polymerization or the like by an emulsifier. Further, as the emulsifier, a reactive emulsifier may be used.

Examples of the above-mentioned anionic reactive emulsifier may include sodium salts, amine salts, and ammonium salts of sulfonic acid compounds having a polymerizable unsaturated group such as a (meth)allyl group, a (meth)acrylic group, a propenyl group, or a butenyl group. Since a coating film to be obtained has an excellent water resistance, ammonium salts of the sulfonic acid compound having the polymerizable unsaturated group among them are preferable. Examples of commercially available products of the ammonium salts of the sulfonic acid compound may include Latemul S-180A (manufactured by Kao Corporation, trade name), Aqualon KH10 (DKS Co., Ltd., trade name), and the like.

In addition, examples of a nonionic reactive emulsifier include an emulsifier that has a polymerizable unsaturated group such as a (meth)allyl group, a (meth)acrylic group, a propenyl group, or a butenyl group and has ethylene oxide and propylene oxide added thereto, and the like.

In addition, among ammonium salts of sulfonic acid compounds having the above-mentioned polymerizable unsaturated group, ammonium salt of a sulfate ester compound having a polymerizable unsaturated group and a polyoxyalkylene group is more preferable. Examples of a commercially available product of ammonium salt of a sulfate ester compound having the above-mentioned polymerizable unsaturated group and polyoxyalkylene group may include Aqualon KH-10 (manufactured by DKS Co., Ltd., trade name) and SR-1025A (Asahi Denka Kogyo Co., Ltd., trade name), and the like.

The concentration of the above-mentioned emulsifier is usually preferably in the range of 0.1 to 10% by mass, particularly preferably 1 to 5% by mass, based on the total amount of a radically polymerizable unsaturated monomer to be used.

An emulsified resin obtained by emulsion polymerization using a reactive emulsifier has an advantage that a defect caused by the presence of the emulsifier does not occur because the emulsifier is incorporated in the resin. For this reason, in an application where the presence of an emulsifier is a problem, it is preferable to use the emulsified resin obtained by such a method.

Examples of usable emulsifiers other than the above-mentioned reactive emulsifier may include nonionic emulsifiers such as polyoxyethylene monooleyl ether, polyoxyethylene monostearyl ether, polyoxyethylene monolauryl ether, polyoxyethylene tridecyl ether, polyoxyethylene phenyl ether, polyoxyethylene nonylphenyl ether, polyoxyethylene octylphenyl ether, polyoxy ethylene monolaurate, polyoxyethylene monostearate, polyoxyethylene monooleate, sorbitan monolaurate, sorbitan monostearate, sorbitan trioleate, and polyoxyethylene sorbitan monolaurate; anionic emulsifiers such as sodium salts and ammonium salts of alkyl sulfonic acid, alkylbenzene sulfonic acid, and alkyl phosphoric acid, and the like. Further, a polyoxyalkylene group-containing anionic emulsifier having an anionic group and, a polyoxyalkylene group such as a polyoxyethylene group, and a polyoxypropylene group in one molecule, a reactive anionic emulsifier having the anionic group and a polymerizable unsaturated group in one molecule, and the like. In addition, a polymer emulsifier, quaternary ammonium, and the like can also be used. These can be used alone or in combination of two or more.

The amount of the above-mentioned emulsifier used is usually 30 parts by mass or less with respect to 100 parts by mass of the solid content of the above-mentioned unsaturated carboxylic acid or acid anhydride-modified polyolefin, and it is particularly preferable that the amount of emulsifier be in the range of 0.5 to 25 parts by mass.

Further, in a case where a resin obtained by emulsion polymerization is used, an emulsion polymerization method is not particularly limited, and the emulsion polymerization can be performed by a generally known method. In addition, an emulsifier may be the above-mentioned reactive emulsifier or may be a general emulsifier.

Also in a case where a resin obtained by a method such as solution polymerization for a general organic solvent is emulsified using an emulsifier, a specific method thereof is not particularly limited, and the emulsification can be performed by a generally known method. Examples of an emulsifier that can be used in this case may include the emulsifiers described above as emulsifiers that can be used for emulsion polymerization.

Further, in a case where various ester compounds or polyhydric alcohols that are insoluble in water as described in detail below are used, they can be made water-soluble by applying a known method such as a method of emulsifying them using an emulsifier or a method of solubilizing them by using an organic solvent having high miscibility with water such as alcohol in addition to water. Examples of the organic solvent having high miscibility with water which can be used in such a method may include methanol, ethanol, isopropyl alcohol, butyl alcohol, an ether solvent, a ketone solvent, and the like.

### (Resin composition)

A resin that is used in the present invention is not particularly limited as long as the resin has -COOR (R is an alkyl group having 50 or less carbon atoms) and a hydroxyl group.

That is, in the present invention, a resin in which a resin component is dispersed or dissolved in an aqueous medium by the above-mentioned method may be used, and any known resin or resins which are novel compounds and have these functional groups can be used.

Such a resin is not particularly limited, and examples of the resin may include an acrylic resin, a polyester resin, a polyether resin, a urethane resin, a silicone resin, and the like containing necessary functional groups. In addition, the resin may be a mixture of these resins. Further, at least some of the components may be low molecular weight compounds.

The resin component may be a mixture of a compound (A-1) having two or more -COOR (R is an alkyl group having 50 or less carbon atoms) groups and a compound (A-2) having a hydroxyl group, and the resin component may be a component having a compound (A-3) having one or more - COOR (R is an alkyl group having 50 or less carbon atoms) groups and one or more hydroxyl groups as a portion or the entirety thereof. Further, the resin component may be a component containing (A-1) and/or (A-2), in addition to a resin composition essentially containing (A-3).

R in the resin of the present invention may be any one of primary, secondary, and tertiary components as long as R has 50 or less carbon atoms. However, R is more preferably a primary or secondary component and most preferably a primary component.

An alkyl group in the above-mentioned alkyl ester group is an alkyl group having 50 or less carbon atoms, but the number of carbon atoms is preferably within the range of 1 to 20, more preferably within the range of 1 to 10, still more preferably within the range of 1 to 6, and most preferably within the range of 1 to 4. Within such a range, a curing reaction can suitably proceed, which is preferable.

The above-mentioned alkyl group is not particularly limited, and a resin having a known alkyl group such as a methyl group, an ethyl group, a benzyl group, an n-propyl group, an isopropyl group, an n-butyl group, an isobutyl group, a sec-butyl group, or a t-butyl group can be used.

Regarding an aqueous thermosetting resin composition, a resin is often neutralized, or basic compounds are often contained in other additives. On the other hand, in a case where a transesterification reaction of tertiary alkyl ester is performed, the most satisfactory curing reaction can be performed using an acidic catalyst. Thus, in a basic aqueous thermosetting resin composition, a reaction rate may be insufficient in the case of tertiary alkyl ester. In addition, primary or secondary alkyl ester is preferable in that the appearance is unlikely to deteriorate.

On the other hand, primary or secondary alkyl ester can be satisfactorily cured using a metal catalyst or a basic catalyst in addition to using an acidic catalyst. For this reason, it can be suitably used in the present invention.

Hereinafter, examples of resins and low molecular weight compounds that can be used in the present invention will be described. The present invention is not limited to those using the following resins and low molecular weight compounds, and the following examples and compounds having the above-mentioned functional group can be used by being appropriately combined as necessary.

### (1) Polymer obtained by polymerization of unsaturated bonds

Polymers, such as acrylic resins, which are obtained by polymerization of unsaturated bonds are resins commonly used in the fields of thermosetting resins such as coating materials and adhesives. When a monomer having a hydroxyl group or an alkyl ester group is used, these functional groups are present in a resin in a proportion of the monomer used. For this reason, it is easy to control the amount of functional groups in the resin and adjust the physical characteristics of the resin, and it can be easily used for the object of the present invention.

In particular, in a case where a hydroxyl group and an alkyl ester group are introduced, they can be introduced by the following monomers (1-1) and (1-2).

### (1-1) Hydroxyl group-containing monomer

The hydroxyl group-containing monomer is not particularly limited, and examples thereof may include the following.

Various hydroxyl group-containing vinyl ethers such as 2-hydroxyethyl vinyl ether, 3-hydroxypropyl vinyl ether, 2-hydroxypropyl vinyl ether, 4-hydroxybutyl vinyl ether, 3-hydroxybutyl vinyl ether, 2-hydroxy-2-methylpropyl vinyl ether, 5-hydroxypentyl vinyl ether, or 6-hydroxyhexyl vinyl ether; or addition reaction products of these various vinyl ethers mentioned above and ε-caprolactone;
various hydroxyl group-containing allyl ethers such as 2-hydroxyethyl(meth)allyl ether, 3-hydroxypropyl(meth)allyl ether, 2-hydroxypropyl(meth)allyl ether, 4-hydroxybutyl(meth)allyl ether, 3-hydroxybutyl(meth)allyl ether, 2-hydroxy-2-methylpropyl(meth)allyl ether, 5-hydroxypentyl(meth)allyl ether, or 6-hydroxyhexyl(meth)allyl ether; or addition reaction products of these various allyl ethers mentioned above and ε-caprolactone;
or various hydroxyl group-containing (meth)acrylates such as 2-hydroxyethyl(meth)acrylate, 2-hydroxypropyl(meth)acrylate, 3-hydroxypropyl(meth)acrylate, 2-hydroxybutyl(meth)acrylate, 3-hydroxybutyl(meth)acrylate, 4-hydroxybutyl(meth)acrylate, polyethylene glycol mono(meth)acrylate, or polypropylene glycol mono(meth)acrylate; or addition reaction main components of these various (meth)acrylates mentioned above and ε-caprolactone, and the like.

In addition, in a case where the hydroxyl group-containing monomer as a monomer does not directly have a hydroxyl group, but the hydroxyl group-containing monomer has a hydroxyl group via a linking group having 5 or more molecules, the hydroxyl group easily moves in the resin, which is preferable in that a reaction easily occurs.

### (1-2) Alkyl ester group-containing monomer

As the above-mentioned alkyl ester group-containing monomer, an extremely large number of types of monomers having alkyl ester groups and polymerizable unsaturated bonds are known. However, typical examples thereof may include compounds represented by the following general formula.

(1-2-a) 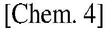 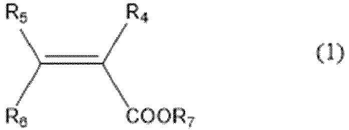 (in the formula, R₄, R₅, and R₆ represent hydrogen, an alkyl group, a carboxyl group, and an alkyl ester group, and
R₇ represents a hydrocarbon group of 50 or less carbon atoms)

Such a compound represented by the above-mentioned General formula (1) may be an ester derivative of a known unsaturated carboxylic acid such as(meth)acrylic acid, crotonic acid, itaconic acid, maleic acid or fumaric acid.

The most typical example of the monomer having an alkyl ester group and a polymerizable unsaturated bond represented by the above-mentioned General formula (1) is an ester of(meth)acrylic acid and an alcohol, and examples thereof include methyl(meth)acrylate, ethyl(meth)acrylate, n-propyl(meth)acrylate, benzyl(meth)acrylate, isopropyl(meth)acrylate, n-butyl(meth)acrylate, isobutyl(meth)acrylate, sec-butyl(meth)acrylate, and t-butyl(meth)acrylate.

Among them, a tertiary alkyl ester such as t-butyl(meth)acrylate is most preferable from the viewpoint of reactivity of crosslinking. In a structural unit derived from a compound represented by the above-mentioned General formula (1), tertiary alkyl ester is most preferably used because primary or secondary alkyl ester has a low transesterification reaction rate.

Since t-butyl(meth)acrylate is an ester of tertiary alkyl, the transesterification reaction rate is fast, and therefore the curing reaction proceeds efficiently. Therefore, it is a very preferable raw material, which is superior in crosslinking reactivity to the primary alkyl ester or the secondary alkyl ester, for donating an ester group to achieve the object of the present invention.

Also, Tg may be adjusted by copolymerizing t-butyl(meth)acrylate with other monomers described in detail below. In this case, it is preferable to set Tg at 80°C or lower.

### (1-2-b)

1-2-b is a polymer having a monomer represented by the following General formula (4) as a partial or entire structural unit. 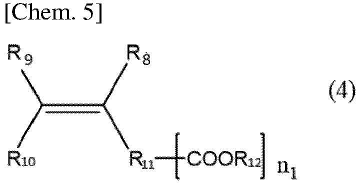
n₁: 1 to 10
   (in the formula, R₈, R₉, and R₁₀ are the same or different and each is a hydrogen, an alkyl group, a carboxyl group, an alkyl ester group or a structure represented by R₁₁-[COOR₁₂];
R₁₁ is an aliphatic, an alicyclic or an aromatic alkylene group with a number of atoms of 50 or less in the main chain, which may have one or more functional groups selected from the group consisting of an ester group, an ether group, an amide group, and a urethane and may have a side chain;
R₁₂ is an alkyl group having 50 or less carbon atoms; and
in the compound represented by the above-mentioned General formula (4), the R₄-[COOR₅] group may be a lactone structure represented by the following General formula (4-1).) 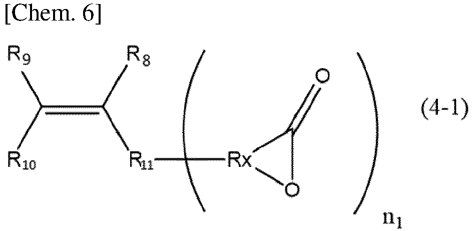
(Rx is a hydrocarbon group having 2 to 10 carbon atoms which may have a branched chain.)

It is preferable that a monomer represented by the above-mentioned General formula (4) have primary or secondary alkyl ester. A primary or secondary alkyl ester group derived from such a monomer easily causes a reaction with a hydroxyl group, and thus it is possible to sufficiently achieve the object of the present invention.

A polymer may be obtained by polymerization reaction via an unsaturated bond of the above-mentioned compound. As to the polymer thus obtained, the main chain formed based on the polymerization of the unsaturated bond and the alkyl ester group are present apart via the linking group in the case that the polymer is used in a thermosetting resin composition using a transesterification reaction as curing reaction. Therefore, the alkyl ester group can move relatively freely. As a result, it has been found by the present inventors that the alkyl ester group and the hydroxyl group are easily accessible, and the reactivity of transesterification is improved. By improving the reactivity of the transesterification reaction in this manner, short-time curing and reduction in the curing temperature can be realized, and the usefulness of the thermosetting resin composition by the transesterification reaction can be enhanced.

In a compound represented by the above-mentioned General formula (4), in a case where a metal compound catalyst to be described in detail below is used, primary and secondary alkyl ester groups show higher transesterification reactivity. Thus, it is particularly preferable to use the primary and secondary alkyl ester groups. Further, in a case where a basic compound is used to achieve aqueousness, the basic compound is more preferable than a tertiary alkyl ester group because the basic compound is a negative catalyst of an acid catalyst.

From the above viewpoint, it is preferable that the structure represented by the above-mentioned General formula (4) do not have a t-butyl group, but the structure may have a t-butyl group as long as the above-mentioned problem does not occur.

When the above-mentioned unsaturated group-containing ester compound of the present invention is used, it is presumed that a decrease in the viscosity of a coating film during curing suppresses foaming and greatly improves a film-forming property. In this respect, the present invention also has suitable effects.

The alkyl group is not particularly limited, and those having known alkyl groups such as a methyl group, an ethyl group, a benzyl group, an n-propyl group, an isopropyl group, an n-butyl group, an isobutyl group, and sec-butyl group can be used. Incidentally, it is preferable that the alkyl group has 50 or less carbon atoms. Since the alkyl group is formed as an alcohol during the transesterification reaction and is preferably volatilized, the alkyl group is more preferably one having 20 or less carbon atoms, still more preferably 10 or less. The boiling point of the alcohol volatilizing in the curing reaction is preferably 300°C or less, more preferably 200°C or less.

The alkyl group in the alkyl ester group (that is, R₁₂ in the above-mentioned general formula) is an alkyl group having 50 or less carbon atoms, but the number of carbon atoms is preferably within the range of 1 to 20, more preferably within the range of 1 to 10, still more preferably within the range of 1 to 6, and most preferably within the range of 1 to 4. Within such a range, it is preferable in that the curing reaction can proceed suitably.

The case where the alkyl ester group is a lactone group is also included in the present invention. The ester group of such a lactone group can also cause the transesterification reaction of the present invention and can be utilized for curing reaction. Such a compound has the chemical structure of the above-mentioned (4-1).

More specifically, as the structure represented by the above-mentioned General formula (1), for example, the following structure may be mentioned. 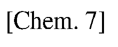 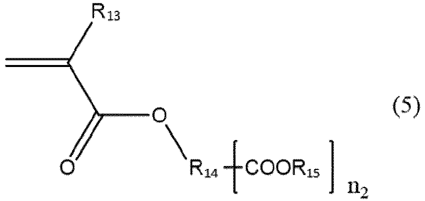
n₂: 1 to 10
   (in the formula, R₁₃ is H or a methyl group;
R₁₄ is an alkylene group with a number of atoms of 48 or less in the main chain, which may have an ester group, an ether group and/or an amide group in the main chain, and may have a side chain; R₁₅ is an alkyl group having 50 or less carbon atoms.). Such a compound is a derivative of(meth)acrylic acid and can be obtained by a known synthesis method using(meth)acrylic acid or a derivative thereof as a raw material.

The number of atoms in the main chain of R₁₄ is more preferably 40 or less, still more preferably 30 or less, and further more preferably 20 or less. The atom that may be contained in the main chain of R₁₄ is not particularly limited, and an oxygen atom, a nitrogen atom, a sulfur atom, a silicon atom and the like in addition to a carbon atom may be contained. More specifically, in the main chain of R₁₄ an ether group, an ester group, an amino group, an amide group, a thioether group, a sulfonate group, a thioester group, a siloxane group, and the like in addition to an alkyl group may be contained.

As specific examples of structures represented by the above-mentioned General formula (5), for example, the compounds represented by the following General formula (12) may be mentioned below. 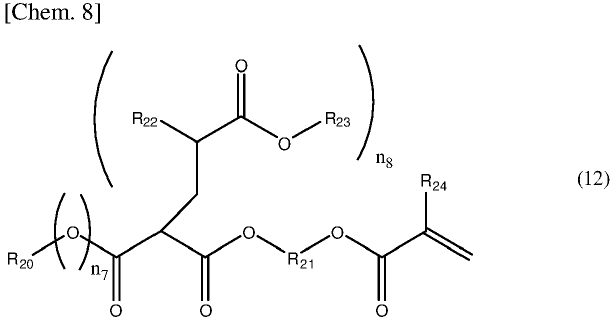 (in the formula, R₂₀ is an alkyl group having 1 to 50 carbon atoms;
R₂₁ is an alkylene group with a number of atoms of 44 or less in the main chain, which may have an ester group, an ether group and/or an amide group in the main chain, and may have a side chain;
R₂₂ is H or a methyl group;
R₂₃ is an alkyl group having 50 or less carbon atoms;
R₂₄ is H or a methyl group;
n₇ is 0 or 1; and
n₈ is 1 or 2.)

The compound represented by the above-mentioned General formula (12) is a compound synthesized by reacting a compound which generates an active anion such as a malonic acid ester or an acetoacetic acid ester having an unsaturated bond in the molecule with an unsaturated compound having an alkyl ester group.

That is, malonic acid esters and acetoacetic acid have a methylene group interposed between carboxy carbons, and this methylene group is easily anionized and widely known as a group which readily produces anion reaction. A compound having an unsaturated bond in alkyl group of malonic acid ester or acetoacetic ester (for example, ester compounds of malonic acid or acetoacetic acid with an unsaturated monomer having a hydroxyl group as detailed below as a hydroxyl group-containing monomer) is reacted with an alkyl ester compound having an unsaturated group to synthesis a compound having both of an unsaturated group and an alkyl ester group.

Only the alkyl ester group in the compound having such a structure can be easily changed by using a raw material used widely, and as a result, the curing reactivity can be easily adjusted. In addition, it is particularly preferable in that the curing reactivity can be adjusted by changing the reaction ratio to an active methylene group.

The compound which can be used as the "alkyl ester compound having an unsaturated group" used in the above-mentioned reaction is not particularly limited, and examples thereof include(meth)acrylic acid alkyl ester, methylene malonate alkyl ester, lactone compounds having an unsaturated group (for example, γ-crotonolactone, 5,6-dihydro-2H-pyran-2-one) and the like can be used.

The reaction can be carried out under basic conditions, and for example, can be carried out by a reaction in an organic solvent in the presence of an alkali metal salt and a crown ether.

An example of such a synthesis reaction is shown below.

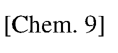

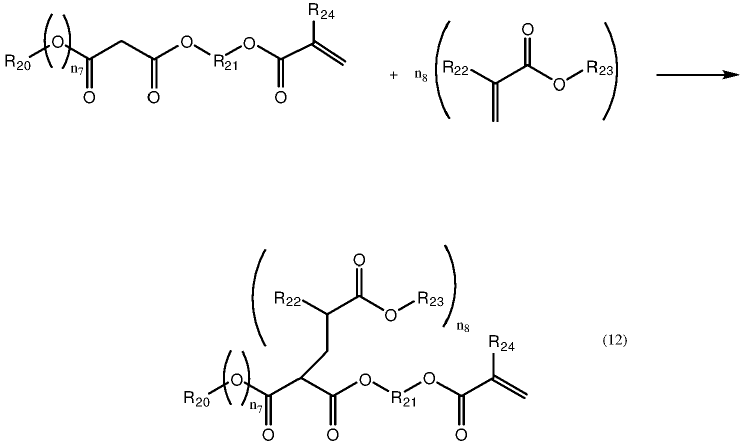

In addition, an alkyl ester compound represented by the above-mentioned General formula (4) can also be obtained by esterification of a carboxylic acid corresponding to the compound.

That is, a compound represented by the following General formula (4-2) is a carboxylic acid corresponding to the alkyl ester compound represented by the above-mentioned General formula (4). 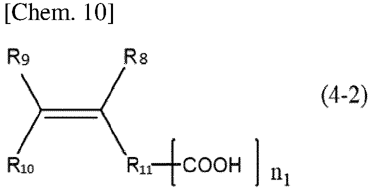
n₁: 1 to 10
   (in the formula, R₈, R₉, and R₁₀ are the same or different, and each represents a hydrogen, an alkyl group, a carboxyl group, an alkyl ester group or a structure represented by the following R₁₁-[COOH]ₙ₁; and
R₁₁ is an aliphatic, an alicyclic or an aromatic alkylene group with a number of atoms of 50 or less in the main chain, which may have one or more functional groups selected from the group consisting of an ester group, an ether group, an amide group, and a urethane and may have a side chain.)

There is a known compound as a compound represented by the above-mentioned General formula (4-2). Such a known compound can also be subjected to a normal esterification reaction (for example, a reaction with alcohol corresponding to an alkyl group of target alkyl ester) to become an unsaturated group-containing ester compound of the present invention.

An example of a specific chemical structure of a compound that can be synthesized by the above-mentioned method will be described below. Meanwhile, the present invention is not limited to compounds to be described below. 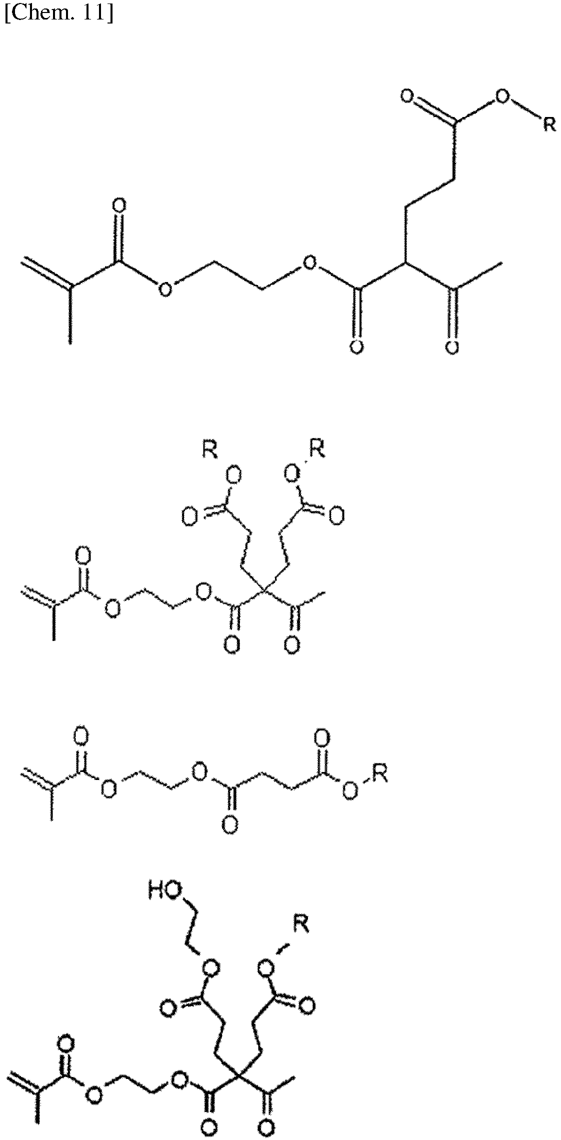 (in the above-mentioned general formula, R is an alkyl group having 50 or less carbon atoms)

Also in the compound represented by the general formula, R in the general formula is an alkyl group having 50 or less carbon atoms, but the number of carbon atoms is preferably within the range of 1 to 20, more preferably within the range of 1 to 10, still more preferably within the range of 1 to 6, and most preferably within the range of 1 to 4. Within such a range, it is preferable in that the curing reaction can proceed suitably.

### (1-2-b-X)

A compound represented by the above-mentioned General formula (4) may be a compound having a functional group represented by the following General formula (31) and an unsaturated group. 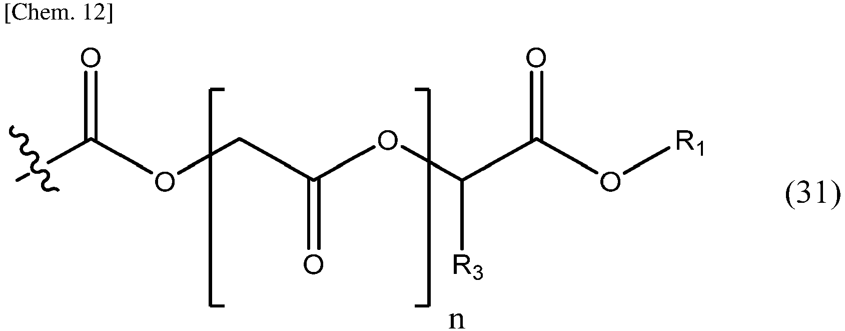
n=0 to 20
R₁ is an alkyl group having 50 or less carbon atoms.
R₃ is hydrogen or an alkyl group having 10 or less carbon atoms.

That is, in a compound represented by General formula (4), a COOR₁₂ group may have a structure as represented by the above-mentioned General formula (31).

An ester group represented by the above-mentioned General formula (31) has high reactivity in a transesterification reaction for unknown reasons. For this reason, an aqueous thermosetting resin composition having a more excellent curing performance than that in the related art can be obtained by using an ester compound having the functional group as a portion or the entirety of a resin component.

### (Regarding structure of General formula (31))

The structure of the above-mentioned General formula (31) is based on an α-substituted carboxylic acid ester skeleton.

In General formula (31), n is 0 to 20.

A lower limit of n is more preferably 1. An upper limit of n is more preferably 5.

Further, the compound may be a mixture of a plurality of components having different values of n in the above-mentioned General formula (31). In this case, an average value nav of n is preferably 0 to 5. A lower limit of nav is more preferably 1. An upper limit of nav is more preferably 3. The measurement of nav can be performed by NMR analysis. Further, the value of n can also be measured by NMR analysis.

Here, n may be 0, but it is further preferable that the value of n exceeds 0 because an aqueous thermosetting resin composition having higher reactivity can be obtained.

That is, when n is 1 or greater, it is possible to achieve curing at a lower temperature and more suitably exhibit the effects of the present invention.

In the above-mentioned General formula (31), any alkyl group having 50 or less carbon atoms can be used as R₁, and may be any one of primary, secondary, and tertiary alkyl groups.

A compound having the above-mentioned functional group (31) can be obtained by reacting an ester compound with a carboxylic acid or a carboxylic acid salt compound corresponding to the structure of a target compound, the ester compound being a compound in which an active group X is introduced at an α-position of a carbonyl group having the structure of the following General formula (32). 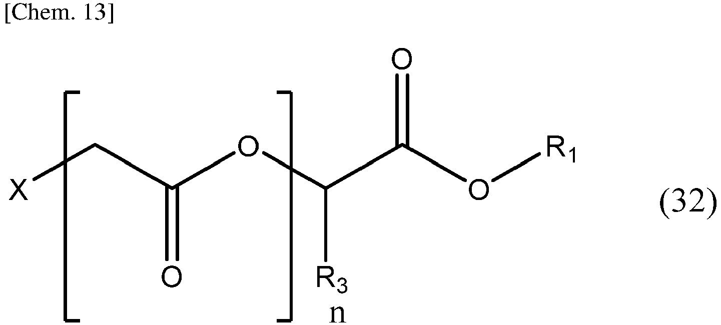 (in the formula, X represents halogen or a hydroxyl group)

The above reaction is represented by general formulas as follows.

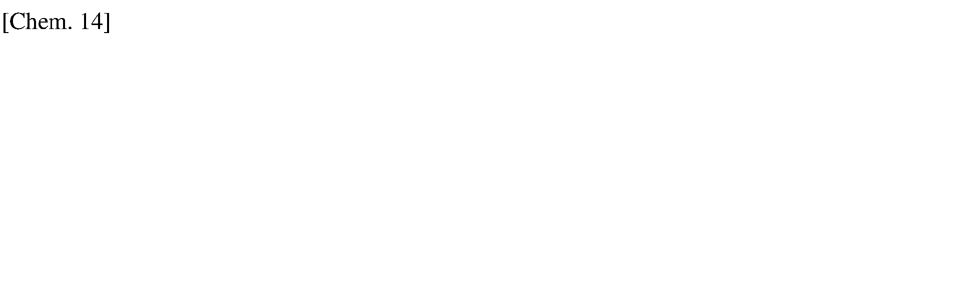

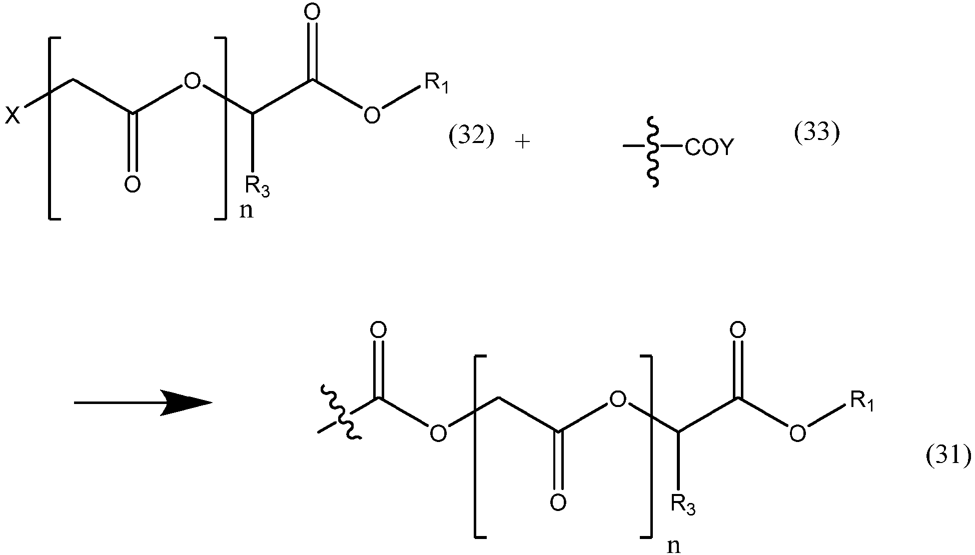

In the above-mentioned general formula, the above-mentioned reaction can be performed on any carboxylic acid when a compound that can be used as a raw material represented by General formula (33) is a carboxylic acid or a carboxylic acid derivative that can cause the above-mentioned reaction. Examples of the carboxylic acid derivatives include those in which Y is OM (carboxylic acid salt), OC=OR (acid anhydride), Cl (acid chloride), and the like. In the case of the above-mentioned carboxylic acid salt of Y=OM, examples of the carboxylic acid salt may include sodium salt, potassium salt, amine salt, zinc salt, and the like. Meanwhile, in a case where a compound is used as a monomer of a polymer, a compound having an unsaturated group can be used as a compound represented by General formula (33).

A compound represented by the above-mentioned General formula (32) can be a compound having a skeleton corresponding to a target structure represented by General formula (31).

In addition, a method of manufacturing a compound represented by the above-mentioned General formula (32) is not particularly limited. Among compounds represented by the above-mentioned General formula (32), a compound of n=0 is a compound having an active group represented by X at an α-position, and examples thereof may include various α-hydroxy acids and α-halogenated carboxylic acids. Specifically, examples thereof may include methyl chloroacetate, ethyl chloroacetate, methyl bromoacetate, ethyl bromoacetate, t-butyl bromoacetate, methyl 2-chloropropionate, methyl glycolate, methyl lactate, ethyl lactate, butyl lactate, and the like.

An example of a method of manufacturing a compound of n=1 or greater among compounds represented by the above-mentioned General formula (32) will be described below.

Meanwhile, contents to be described below are an example of a manufacturing method, and the present invention is not limited to a compound obtained by the following manufacturing method.

For example, a compound can be obtained by a reaction between a carboxylic acid having halogen at an α-position, a salt thereof, or a derivative thereof and a carboxylic acid alkyl ester having halogen or a hydroxyl group at an α-position. When this is represented by general formulas, the following is obtained.

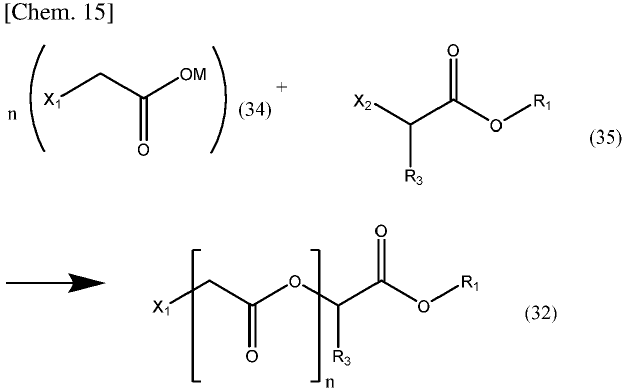

Examples of the carboxylic acid having halogen at an α-position, a salt thereof, or a derivative thereof may include an alkali metal salt (potassium salt, sodium salt, or the like), an acid anhydride, an acid chloride, and the like of the carboxylic acid. As a specific compound represented by the above-mentioned General formula (34), sodium chloroacetate or the like can be used.

Examples of the carboxylic acid alkyl ester having halogen or a hydroxyl group at an α-position may include an alkyl ester of an α-substituted carboxylic acid compound such as chloroacetic acid, bromoacetic acid, or lactic acid. An alkyl group of the above-mentioned alkyl ester is not particularly limited and may be an alkyl group having 1 to 50 carbon atoms.

Such an alkyl group may be any one of primary to tertiary alkyl groups, and specific examples thereof may include a methyl group, an ethyl group, a benzyl group, an n-propyl group, an isopropyl group, an n-butyl group, an isobutyl group, a sec-butyl group, a t-butyl group, and the like.

In the above-mentioned reaction, it is preferable that X₁ and X₂ be of different types. It is preferable to select a combination of functional groups so that X₁ remains unreacted on the assumption that X₁ and X₂ have different reactivities as different types of functional groups. Specifically, a combination of X₁ as a bromo group and X₂ as a chloro group is particularly preferable.

In addition, the value of n can be adjusted by adjusting a mixing ratio of two types of raw materials in the above-mentioned reaction. In the above-mentioned reaction, a mixture of a plurality of different types of compounds having different values of n is generally obtained. Regarding a compound represented by the above-mentioned General formula (32), only a compound having a specific value of n by refining the compound may be used, or a mixture of a plurality of types of compounds having different values of n may be used.

A chemical structure represented by the above-mentioned General formula (31) can be formed by reacting a compound represented by the general formula (32) with various carboxylic acid compounds. Thus, when a carboxylic acid having an unsaturated group is used as the "compound having a carboxylic acid group", a compound having a functional group and a polymerizable unsaturated group represented by the above-mentioned General formula (31) can be obtained.

Specifically, for example, when a compound represented by the above-mentioned General formula (32) is reacted with (meth)acrylic acid, a compound represented by the following General formula (36) is obtained. 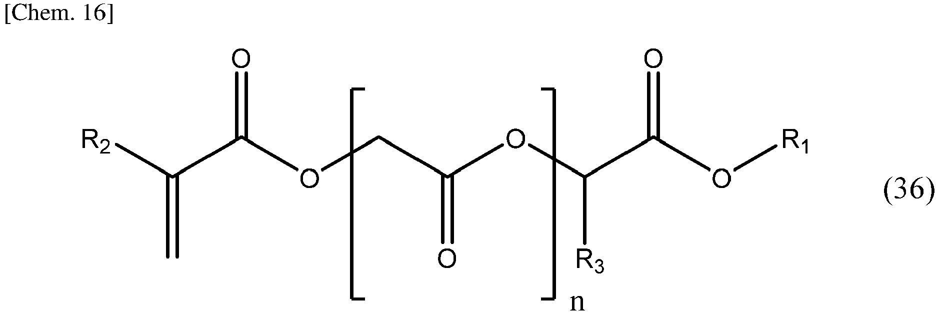 (in the formula, R₁ is an alkyl group having 50 or less carbon atoms.
R₂ is hydrogen or a methyl group.
R₃ is hydrogen or an alkyl group having 10 or less carbon atoms.
n is 1 to 20.)

R₁ in a compound represented by the above-mentioned General formula (36) may be any one of primary, secondary, and tertiary alkyl groups as long as R₁ has 50 or less carbon atoms. However, R₁ is more preferably a primary or secondary alkyl group and most preferably a primary alkyl group.

### (1-2-b-Y)

A compound represented by the above-mentioned General formula (4) may be a compound having a functional group represented by the following General formula (41) and/or a functional group represented by the following General formula (42), and an unsaturated group. 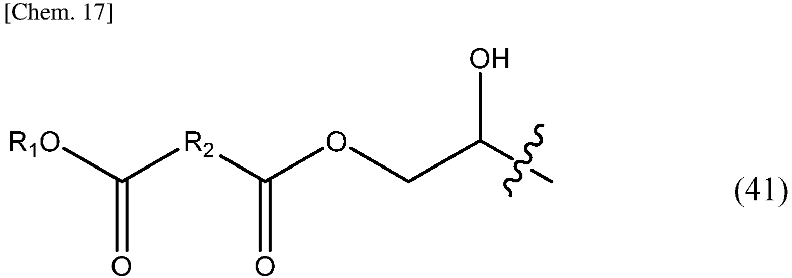 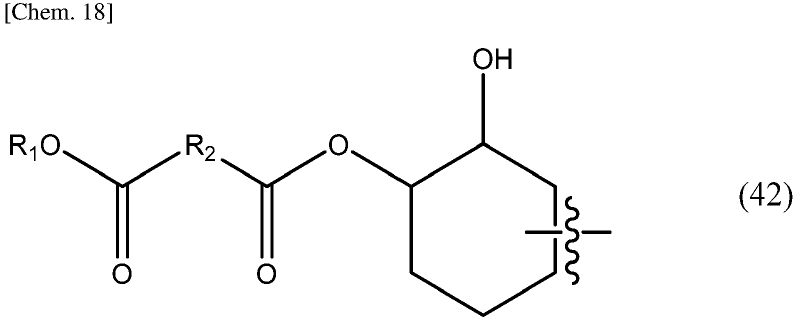 (in any one of the above-mentioned General formula (41) and General formula (42), R₁ is an alkyl group having 50 or less carbon atoms.
R₂ is an alkylene group having 50 or less carbon atoms that may contain an oxygen atom and a nitrogen atom as a portion thereof.)

That is, in a compound represented by General formula (4), a COOR₁₂ group may have a structure represented by the above-mentioned General formula (41) and/or a structure represented by General formula (42).

An R₂ group in the above-mentioned General formula (41) is an alkylene group having 50 or less carbon atoms that may contain an oxygen atom and a nitrogen atom as a portion thereof, and specifically, may include a methylene group, an ethylene group, an n-propylene group, an i-propylene group, an n-butylene group, or a cyclic structure such as a benzene ring or a cyclohexyl ring (carbon chains 1 to 50). Among them, an ethylene group is particularly preferable because the ethylene group is made from an inexpensive raw material and has an excellent reactivity.

Examples of a compound having a structure represented by the above-mentioned General formula (41) may include a compound represented by the following General formula (43). 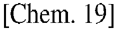 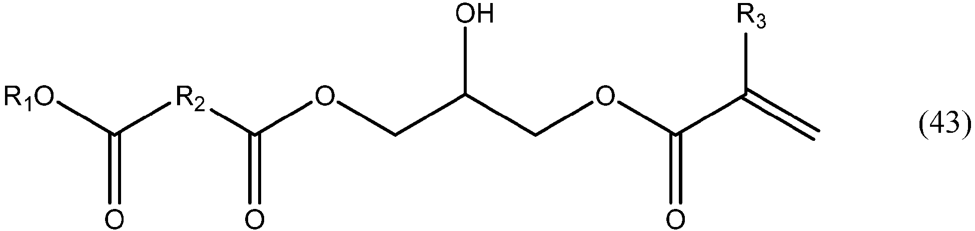 (in the formula, R₁ is an alkyl group having 50 or less carbon atoms.
R₂ is an alkylene group having 50 or less carbon atoms that may contain an oxygen atom and a nitrogen atom as a portion thereof.
R₃ is hydrogen or a methyl group.)

Among ester compounds represented by the above-mentioned General formula (43), an ester compound represented by the following General formula (45) is more preferable.

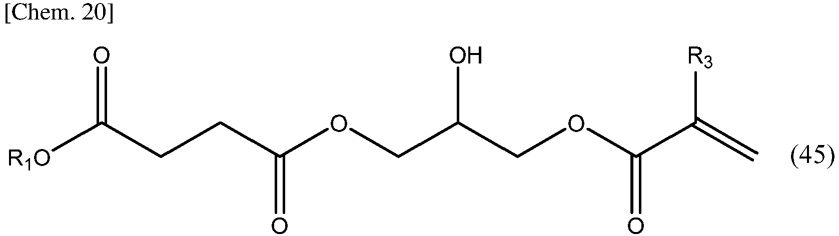

A method of manufacturing an ester compound having a functional group represented by the above-mentioned General formula (41) is not particularly limited, but examples of the method may include a method of reacting an epoxy compound with a compound having an alkyl ester group and a carboxyl group. When this is represented by a general formula, the following reaction is shown.

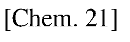

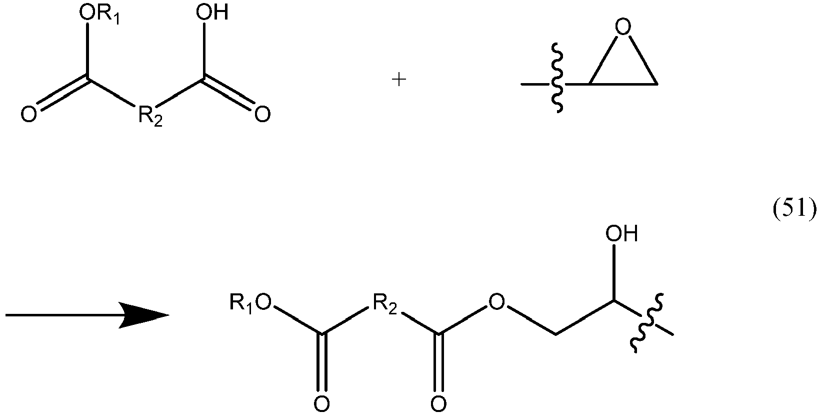

In the above-mentioned reaction, a compound having an alkyl ester group and a carboxyl group to be used can be manufactured by a reaction between acid anhydride and alcohol such as the following reaction.

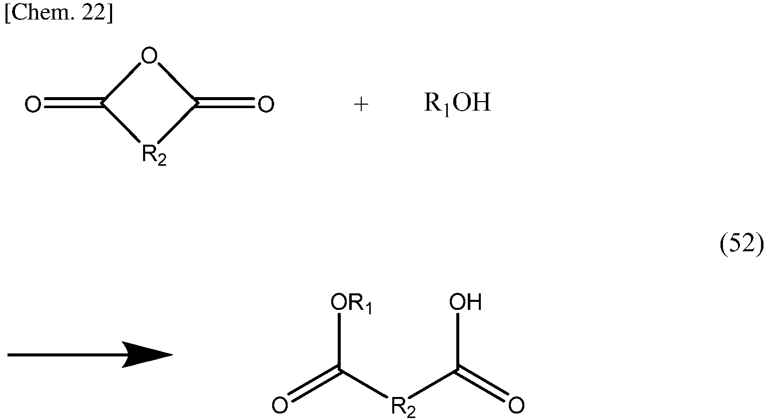

Acid anhydride which is a raw material in a reaction represented by the above-mentioned General formula (52) is not particularly limited, and various dibasic anhydride such as succinic anhydride, maleic anhydride, phthalic anhydride, hexahydrophthalic anhydride, methylhexahydrophthalic anhydride, benzoic anhydride, and itaconic anhydride having a cyclic structure can be used. A reaction represented by the above-mentioned General formula (52) is a well-known general reaction and can be performed under general reaction conditions and the like.

Meanwhile, a compound having an alkyl ester group and a carboxyl group which is used in a synthesis method represented by the above-mentioned General formula (51) is not limited to a compound obtained by a method of the above-mentioned General formula (52), and compounds obtained by other methods may also be used.

In the synthesis method represented by the above-mentioned General formula (51), an epoxy compound is used as an essential component. The above-mentioned epoxy compound is not particularly limited as long as it has an unsaturated double bond and an epoxy group, and any epoxy compound can be used.

Any known epoxy compound can be used as an epoxy compound that can be used in the above-mentioned reaction, and examples thereof may include glycidyl methacrylate, 4-hydroxybutyl acrylate glycidyl ether, trimethylolpropane triglycidyl ether, and the like.

For example, when epichlorohydrin is used, an epoxy group can be introduced into a compound having various skeletons by reacting the epichlorohydrin with a phenol compound, a carboxylic acid compound, a hydroxyl group-containing compound, or the like. A compound having a functional group represented by the above-mentioned General formula (41) can be obtained by performing the above-mentioned reaction on such any epoxy compound. A general formula of such a reaction is shown below.

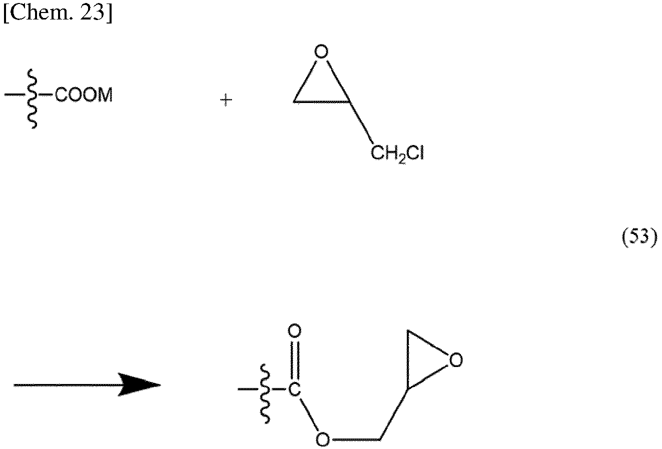

Examples of the hydroxy carboxylic acid having the above-mentioned carboxyl group and unsaturated group may include (meth)acrylic acid and the like.

Further, the above-mentioned epoxy compound may be a cyclic epoxy compound.

That is, in a case where a cyclic epoxy compound is used as an epoxy compound, a compound having a structure represented by General formula (52) can be obtained by the following reaction.

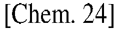

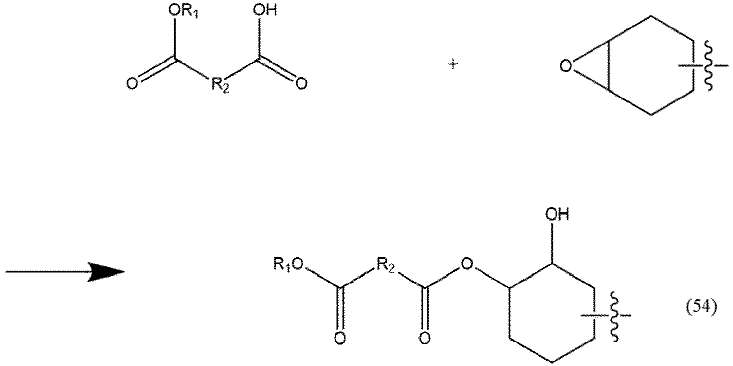

Examples of an alicyclic epoxy compound that can be used for the above-mentioned general formula may include 3,4-epoxycyclohexylmethylmethacrylate, 3',4'-epoxycyclohexylmethyl 3,4-epoxycyclohexanecarboxylate, and the like.

Specific examples of the above-mentioned compound having a functional group represented by the following General formula (41) and/or a compound represented by the following General formula (42), and an unsaturated group may include a compound represented by the following general formula, and the like.

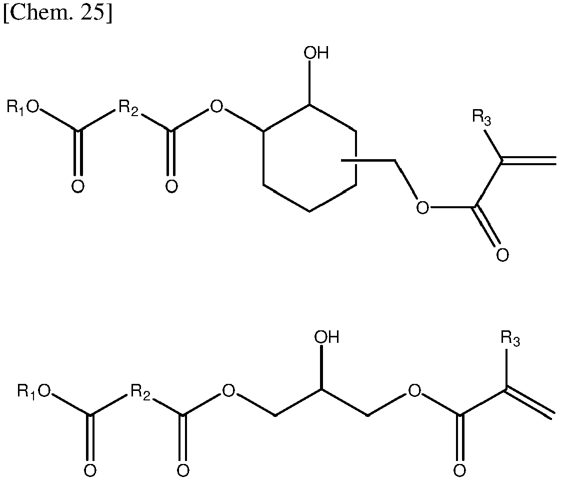

Examples of specific chemical structures of compounds that can be synthesized by the methods exemplified above are shown below. It is to be noted that the present invention is not limited to the compounds exemplified below.

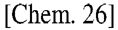

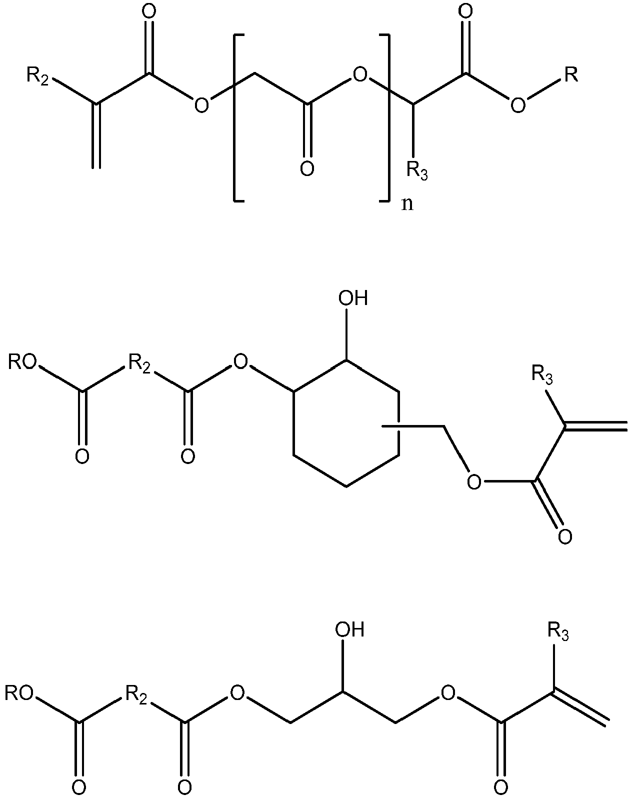

### (in the above-mentioned general formula, R is an alkyl group having 50 or less carbon atoms)

Also in the compound represented by the above-mentioned general formula, R in the general formula is an alkyl group having 50 or less carbon atoms, but the number of carbon atoms is preferably within the range of 1 to 20, more preferably within the range of 1 to 10, still more preferably within the range of 1 to 6, and most preferably within the range of 1 to 4. Within such a range, it is preferable in that the curing reaction can proceed suitably.

Meanwhile, in an aqueous thermosetting resin composition according to the above-mentioned "(a) a method of making a resin aqueous by using a water-soluble or water-dispersible component", it is preferable to use a compound described as (1-2-b) as "(1-2) alkyl ester group-containing monomer". Using the monomer increases transesterification reactivity, which is particularly preferable. (1-2-b-X) and (1-2-b-Y) included in (1-2-b) can also be suitably used.

### (1-3) Other monomers

A polymer used in the present invention can also be a homopolymer or a copolymer composed of only the monomers shown in (1-1) and (1-2) described above, or can also be a copolymer using other monomers.

Other monomers that can be used in the above-mentioned polymer are not particularly limited, and any monomer having a polymerizable unsaturated group can be used. Monomers that can be used are shown below.

Various α-olefins such as ethylene, propylene or butane-1;
various halogenated olefins except fluoroolefin such as vinyl chloride or vinylidene chloride; various aromatic vinyl compounds such as styrene, α-methylstyrene or vinyltoluene; various amino group-containing amide unsaturated monomers such as N-dimethylaminoethyl(meth)acrylamide, N-diethylaminoethyl(meth)acrylamide, N-dimethylaminopropyl(meth)acrylamide or N-diethylaminopropyl(meth)acrylamide;
various dialkylaminoalkyl(meth)acrylates such as dimethylaminoethyl(meth)acrylate or diethylaminoethyl(meth)acrylate; various amino group-containing monomers such as tert-butylaminoethyl(meth)acrylate, tert-butylaminopropyl(meth)acrylate, aziridinyl ethyl(meth)acrylate, pyrrolidinylethyl(meth)acrylate or piperidinylethyl(meth)acrylate;
various carboxyl group-containing monomers such as (meth)acrylic acid, crotonic acid, itaconic acid, maleic acid or fumaric acid; various epoxy group-containing monomers such as glycidyl(meth)acrylate, β-methylglycidyl(meth)acrylate or (meth)allyl glycidyl ether; mono- or diesters of various α, β-unsaturated dicarboxylic acids such as maleic acid, fumaric acid or itaconic acid with monohydric alcohols having 1 to 18 carbon atoms;
various hydrolyzable silyl group-containing monomers such as vinyltrimethoxysilane, vinyltriethoxysilane, vinyltripropoxysilane, vinylmethyldiethoxysilane, vinyltris (β-methoxyethoxy) silane, allyltrimethoxysilane, trimethoxysilylethyl vinyl ether, triethoxysilylethyl vinyl ether, methyldimethoxysilyl ethyl vinyl ether, trimethoxysilylpropyl vinyl ether, triethoxysilylpropyl vinyl ether, methyldiethoxysilylpropyl vinyl ether, γ-(meth)acryloyloxypropyltrimethoxysilane, γ-(meth)acryloyloxypropyltriethoxysilane or γ-(meth)acryloyloxypropylmethyldimethoxysilane;
various fluorine-containing α-olefins such as vinyl fluoride, vinylidene fluoride, trifluoroethylene, tetrafluoroethylene, chlorotrifluoroethylene, bromotrifluoroethylene, pentafluoropropylene or hexafluoropropylene; various fluorine atom-containing monomers such as various perfluoroalkyl perfluorovinyl ether or (per) fluoroalkyl vinyl ether (provided that the alkyl group has 1 to 18 carbon atoms) including trifluoro methyl trifluorovinyl ether, pentafluoroethyl trifluorovinyl ether or heptafluoropropyl trifluorovinyl ether;
various alkyl vinyl ethers or substituted alkyl vinyl ethers such as methyl vinyl ether, ethyl vinyl ether, n-propyl vinyl ether, isopropyl vinyl ether, n-butyl vinyl ether, isobutyl vinyl ether, tert-butyl vinyl ether, n-pentyl vinyl ether, n-hexyl vinyl ether, n-octyl vinyl ether, 2-ethylhexyl vinyl ether, chloromethyl vinyl ether, chloroethyl vinyl ether, benzyl vinyl ether or phenylethyl vinyl ether;
various cycloalkyl vinyl ethers such as cyclopentyl vinyl ether, cyclohexyl vinyl ether or methyl cyclohexyl vinyl ether; various aliphatic carboxylic acid vinyls such as vinyl 2,2-dimethyl propanoate, vinyl 2,2-dimethyl butanoate, vinyl 2,2-dimethyl pentanoate, vinyl 2,2-dimethyl hexanoate, vinyl 2-ethyl-2-methyl butanoate, vinyl 2-ethyl-2-methyl pentanoate, vinyl 3-chloro-2,2-dimethyl propanoate and the like, as well as vinyl acetate, vinyl propionate, vinyl butyrate, vinyl isobutyrate, vinyl caproate, vinyl caprylate, vinyl caprate or vinyl laurate, C₉ branched aliphatic carboxylic acid vinyl, C₁₀ branched aliphatic carboxylic acid vinyl, C₁₁ branched aliphatic carboxylic acid vinyl or vinyl stearate; vinyl esters of carboxylic acids having a cyclic structure such as vinyl cyclohexane carboxylate, vinyl methyl cyclohexane carboxylate, vinyl benzoate or vinyl p-tert-butylbenzoate.

In the present invention, the above-mentioned various monomers of (1-1) to (1-3) can be combined and polymerized as necessary to obtain a compound having both an alkyl ester group and a hydroxyl group, a compound having an alkyl ester group, and a compound having a hydroxyl group. Further, the above-mentioned functional groups required for water solubilization can also be introduced into a resin in combination in a required proportion depending on the purpose.

The method for producing the polymer is not particularly limited, and the polymer can be produced by polymerization by a known method. More specifically, polymerization methods such as a solution polymerization method in an organic solvent, an emulsion polymerization method in water, a miniemulsion polymerization method in water, an aqueous solution polymerization method, a suspension polymerization method, a UV curing method can be mentioned.

Further, in a case where solution polymerization has been performed in an organic solvent, aqueousness is achieved by performing a known operation after the solution polymerization, and thus a form that can be used for the aqueous thermosetting resin composition of the present invention may be obtained.

In addition, a hydroxyl group and/or an alkyl ester group may be introduced into a side chain by reacting a side chain functional group of a polymer obtained by polymerizing a composition containing the above-mentioned monomer. A reaction with a side chain is not particularly limited, and examples thereof may include transesterification, a reaction with isyanate, a reaction with epoxy, a reaction with silane, a reaction with melamine resin, an addition reaction, hydrolysis, dehydration condensation, a substitution reaction, and the like.

The molecular weight of the above-mentioned polymer is not particularly limited, and for example, a weight average molecular weight can be 3,000 to 1,000,000. An upper limit of the above-mentioned weight average molecular weight is more preferably 300,000, further preferably 100,000, and still further preferably 50,000. A lower limit of the above-mentioned weight average molecular weight is more preferably 3,000, and further preferably 4,000.

A water-soluble acrylic resin having a weight average molecular weight which is usually in the range of 5,000 to 100,000 and preferably 5,000 to 50,000, and acrylic resin particles which are dispersoids of an acrylic resin emulsion having a weight average molecular weight of 50,000 or more and preferably 100,000 or more can be exemplified.

An aqueous acrylic resin preferably contains a hydroxyl group, and it is preferable that an aqueous acrylic resin generally have a hydroxyl value in the range of 20 to 200 mgKOH/g, and particularly 20 to 150 mgKOH/g, from the viewpoint of water dispersibility or compatibility with other components, curability of a coating film to be formed, and the like. In addition, it is preferable that an aqueous acrylic resin be introduced so that a resin acid value is generally in the range of 5 to 200. A lower limit of the above-mentioned acid value is preferably 10, and further preferably 15. An upper limit of the above-mentioned acid value is preferably 120, and further preferably 80.

### (2) Polyester polyol

The polyester polyol can usually be produced by an esterification reaction or a transesterification reaction of an acid component and an alcohol component.

As the above-mentioned acid component, a compound which is ordinarily used as an acid component in the production of a polyester resin can be mentioned. Examples of the acid component include aliphatic polybasic acids, alicyclic polybasic acids, aromatic polybasic acids and the like, and anhydrides and esterified products thereof.

In addition, a polyester resin may be a resin obtained by reacting α-olefin epoxide such as propylene oxide and butylene oxide, a monoepoxy compound such as Cardura E10 (manufactured by Japan Epoxy Resin Co., Ltd., trade name, glycidyl ester of synthetic highly branched saturated fatty acid), or the like with an acid group of the polyester resin.

In addition, an aqueous polyester resin may be urethane-modified.

The polyester resin can have a weight average molecular weight in the range of 2,000 to 100,000, and preferably 3,000 to 30,000. The weight average molecular weight of the polyester resin can be measured by the same method as that for the weight average molecular weight of the above-mentioned acrylic resin.

As the above-mentioned aliphatic polybasic acid, and anhydride and esterified product thereof, aliphatic compounds having two or more carboxyl groups in one molecule, an acid anhydride of the aliphatic compound and an esterified product of the aliphatic compound are generally mentioned, for example, aliphatic polyvalent carboxylic acids such as succinic acid, glutaric acid, adipic acid, pimelic acid, suberic acid, azelaic acid, sebacic acid, undecane diacid, dodecanedioic acid, brassylic acid, octadecanedioic acid, citric acid, and butanetetracarboxylic acid; anhydrides of the above-mentioned aliphatic polyvalent carboxylic acids; esterified products of lower alkyl having approximately 1 to approximately 4 carbon atoms of the aliphatic polyvalent carboxylic acid, and the like, and any combinations thereof may be mentioned.

The aliphatic polybasic acid is preferably adipic acid and/or adipic anhydride from the viewpoint of the smoothness of the coating film to be obtained.

The above-mentioned alicyclic polybasic acids, and their anhydrides and esterified products are generally compounds having one or more alicyclic structures and two or more carboxyl groups in one molecule, acid anhydrides of the above-mentioned compounds and esterified products of the above-mentioned compounds. The alicyclic structure is mainly a 4- to 6-membered ring structure. Examples of the alicyclic polybasic acid and anhydride and esterified product thereof include the alicyclic polyvalent carboxylic acids such as 1,2-cyclohexanedicarboxylic acid, 1,3-cyclohexanedicarboxylic acid, 1,4-cyclohexanedicarboxylic acid, 4-cyclohexene-1, 2-dicarboxylic acid, 3-methyl-1,2-cyclohexanedicarboxylic acid, 4-methyl-1,2-cyclohexanedicarboxylic acid, 1,2,4-cyclohexanetricarboxylic acid, 1,3,5-cyclohexanetricarboxylic acid and the like; anhydrides of the alicyclic polyvalent carboxylic acids; esterified products of the lower alkyl having approximately 1 to approximately 4 carbon atoms of the alicyclic polyvalent carboxylic acid, and the like; and any combinations thereof may be mentioned.

From the viewpoint of the smoothness of the coating film to be obtained, it is preferable to use 1,2-cyclohexanedicarboxylic acid, 1,2-cyclohexanedicarboxylic anhydride, 1,3-cyclohexanedicarboxylic acid, 1,4-cyclohexanedicarboxylic acid, 4-cyclohexene-1,2-dicarboxylic acid and 4-cyclohexene-1,2-dicarboxylic anhydride, and 1,2-cyclohexane dicarboxylic acid and/or 1,2-cyclohexanedicarboxylic anhydride is more preferable.

The above-mentioned aromatic polybasic acid and their anhydride and esterified product may generally include aromatic polyvalent carboxylic acids such as an aromatic compound having two or more carboxyl groups in one molecule, an acid anhydride of the aromatic compound and an esterified product of the aromatic compound including phthalic acid, isophthalic acid, terephthalic acid, naphthalene dicarboxylic acid, 4,4'-biphenyl dicarboxylic acid, trimellitic acid, pyromellitic acid and the like; acid anhydride of the aromatic polyvalent carboxylic acid, esterified products of lower alkyl having approximately 1 to approximately 4 carbon atoms of the aromatic polyvalent carboxylic acid, and the like, and any combinations thereof.

As the above-mentioned aromatic polybasic acid and their anhydride and esterified product, phthalic acid, phthalic anhydride, isophthalic acid, trimellitic acid, and trimellitic anhydride are preferable.

Further, as the acid component, acid components other than the aliphatic polybasic acid, the alicyclic polybasic acid and the aromatic polybasic acid, for example, fatty acids such as coconut oil fatty acid, cottonseed oil fatty acid, hemp oil fatty acid, rice bran oil fatty acid, fish oil fatty acid, Tall oil fatty acid, soybean oil fatty acid, linseed oil fatty acid, tung oil fatty acid, rapeseed oil fatty acid, castor oil fatty acid, dehydrated castor oil fatty acid, safflower oil fatty acid and the like; monocarboxylic acids such as lauric acid, myristic acid, palmitic acid, stearic acid, oleic acid acid, linoleic acid, linolenic acid, benzoic acid, p-tert-butylbenzoic acid, cyclohexanoic acid, 10-phenyloctadecanoic acid and the like; hydroxy carboxylic acids such as lactic acid, 3-hydroxybutanoic acid, 3-hydroxy-4-ethoxybenzoic acid, and the like, and any combination thereof may be mentioned.

As the alcohol component, a polyhydric alcohol having two or more hydroxyl groups in one molecule may be used. The polyhydric alcohol may include, for example, dihydric alcohols such as ethylene glycol, propylene glycol, diethylene glycol, trimethylene glycol, tetraethylene glycol, triethylene glycol, dipropylene glycol, 1,4-butanediol, 1,3-butanediol, 2,3-butanediol, 1,2-butane diol, 2-methyl-1,3-propanediol, 3-methyl-1,2-butanediol, 1,1,1-trimethylolpropane, 2-butyl-2-ethyl-1,3-propanediol, 1,2-pentanediol, 1,5-pentanediol, 1,4-pentanediol, 2,4-pentanediol, 2,3-dimethyltrimethylene glycol, tetramethylene glycol, 3-methyl-4,3-pentanediol, 3-methyl-1,5-pentanediol, 2,2,4-trimethyl-1,3-pentanediol, 1,6-hexanediol, 1,5-hexanediol, 1,4-hexanediol, 2,5-hexanediol, neopentyl glycol, 1,4-cyclohexanedimethanol, tricyclodecanedimethanol, hydroxypivalic acid neopentyl glycol ester, hydrogenated bisphenol A, hydrogenated bisphenol F, and dimethylolpropionic acid; polylactone diol obtained by adding a lactone compound such as ε-caprolactone to the dihydric alcohol; ester diol compounds such as bis (hydroxyethyl) terephthalate; polyether diol compounds such as alkylene oxide adducts of bisphenol A, polyethylene glycol, polypropylene glycol and polybutylene glycol; trihydric or higher alcohol such as glycerin, trimethylolethane, trimethylolpropane, diglycerin, triglycerin, 1,2,6-hexanetriol, pentaerythritol, dipentaerythritol, tris (2-hydroxyethyl) isocyanuric acid, sorbitol, and mannitol; a polylactone polyol compound obtained by adding a lactone compound such as ε-caprolactone to the trihydric or higher alcohol; fatty acid esterified products of glycerin, and the like.

As the above-mentioned alcohol component, an alcohol component other than the polyhydric alcohol, for example, a monoalcohol such as methanol, ethanol, propyl alcohol, butyl alcohol, stearyl alcohol or 2-phenoxyethanol; and an alcohol compound obtained by reacting a monoepoxy compound such as propylene oxide, butylene oxide, "Cardura E10" (trade name, glycidyl esters of synthetic hyperbranched saturated fatty acids, manufactured by HEXION Specialty Chemicals, Inc.) with an acid may be used.

The polyester polyol is not particularly limited, and it can be produced by a usual method. For example, the acid component and the alcohol component are heated in a nitrogen stream at approximately 150 to approximately 250°C. for approximately 5 to approximately 10 hours to carry out esterification reaction or transesterification reaction of the acid component and the alcohol component, thereby the polyester polyol (E-2) can be produced.

A carboxyl group of the above-mentioned polyester resin can be neutralized using the above-described basic substance as necessary.

An aqueous polyester resin preferably contains a hydroxyl group, and it is preferable that an aqueous polyester resin have generally a hydroxyl value in the range of 20 to 200 mgKOH/g, and particularly 20 to 150 mgKOH/g, from the viewpoint of water dispersibility or compatibility with other components, curability of a coating film to be formed, and the like. In addition, it is preferable that an aqueous polyester resin be introduced so that an acid value is generally in the range of 5 to 200. A lower limit of the above-mentioned acid value is preferably 10, and further preferably 15. An upper limit of the above-mentioned acid value is preferably 120, and further preferably 80.

### (3) (Compound obtained as derivatives of compound having active methylene group)

A compound having an alkyl ester group can be obtained from a compound having an active methylene group represented by the following General formula (6) by a reaction of the active methylene group and by reacting the active methylene group with various compounds (for example, a compound having a vinyl group, a compound having a halogen group, and the like). A compound obtained by such a reaction can also be used as a component in a resin component (A) of the present invention. 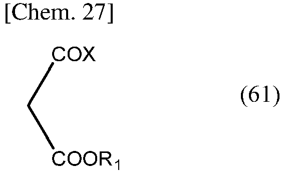 (in the formula, R₁ represents a primary to tertiary alkyl group.
X represents an OR₁ group or a hydrocarbon group having 5 or less carbon atoms. When two R₄₀ are present in one molecule, these R₄₀ may be the same or different.)

Although the structure of R₁ is not particularly limited, but those having a known ester group such as methyl group, ethyl group, benzyl group, n-propyl group, isopropyl group, n-butyl group, isobutyl group, and sec-butyl ester group can be used.

Specific examples of such a compound having an active methylene group include malonic acid esters and acetoacetic acid esters. Compounds obtained by adding these compounds to a vinyl compound can be used. Each of these compounds will be described below.

### (3-1) Compound obtained by reaction between compound having active methylene group and compound having vinyl group

A compound having an active methylene group can be added to a double bond by a Michael addition reaction. A general Michael addition reaction using such a compound having an active methylene group is represented by the following formula.

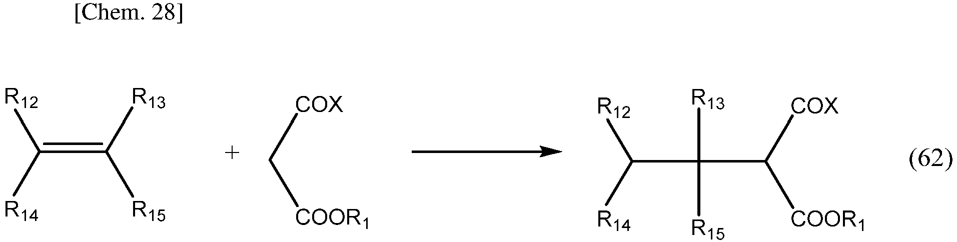

In the above-mentioned reaction, both the two hydrogens of the active methylene group cause a Michael addition reaction, whereby a compound represented by the following formula (62-1) can be obtained.

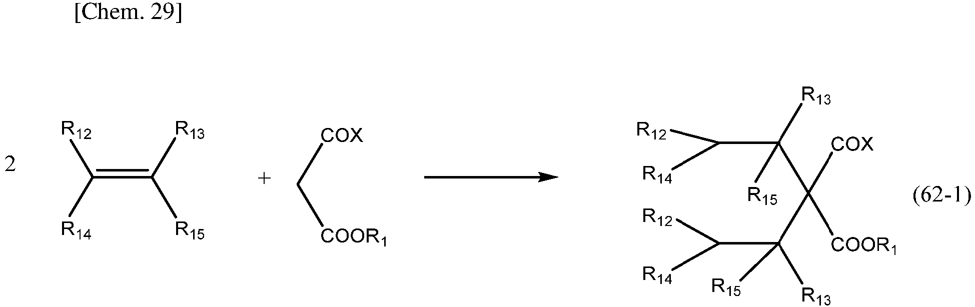

The compound obtained by such a reaction has a structure represented by the above-mentioned General formula (62) and/or a structure represented by the above-mentioned General formula (62-1). The compound has two or more alkyl ester groups so it can be particularly preferably used for the purpose of the present invention.

In particular, when(meth)acrylic acid or a derivative thereof is used as the vinyl compound of the above-mentioned general formula, the following reaction occurs.

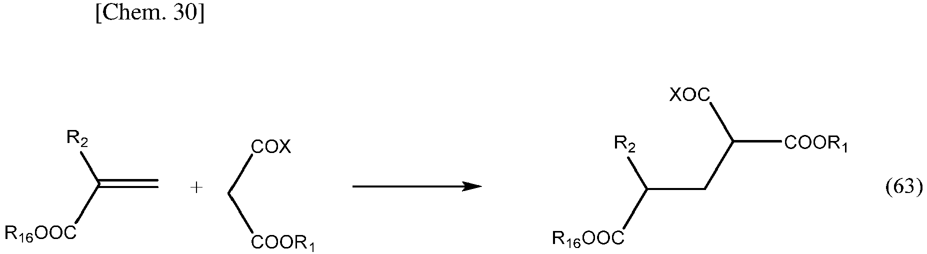

In the above-mentioned general formula, R₁ represents a primary or secondary alkyl group having 50 or less carbon atoms.
R₂ represents a hydrogen or a methyl group.
R₁₆ is not particularly limited, and may be any functional group depending on the purpose.

In the above-mentioned reaction, both of the two hydrogens of the active methylene group cause a Michael addition reaction, whereby a compound represented by the following General formula (64) can be obtained.

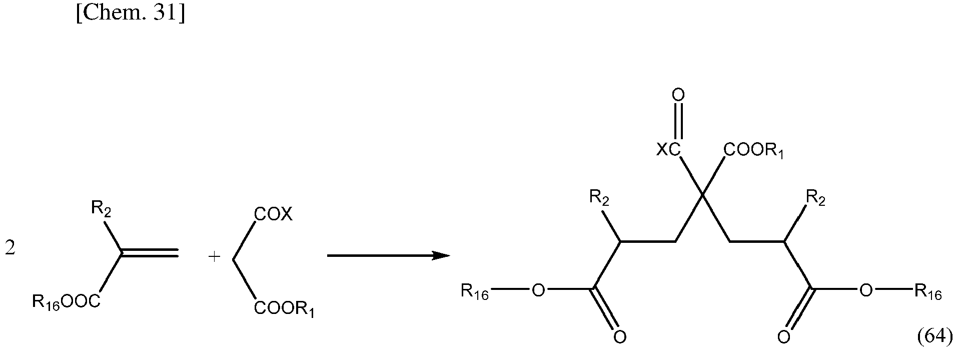

The compound represented by the above-mentioned General formula (64) can be obtained by adjusting the molar ratio of the(meth)acrylate and the active methylene compound in the mixing of the raw materials. Further, by adjusting these molar ratios, a mixture of the compound represented by the above-mentioned General formula (63) and the compound represented by the above-mentioned General formula (64) can be obtained.

The ester compound obtained by such a reaction will have a structural unit represented by the above-mentioned General formula (65), (66) in the molecule.

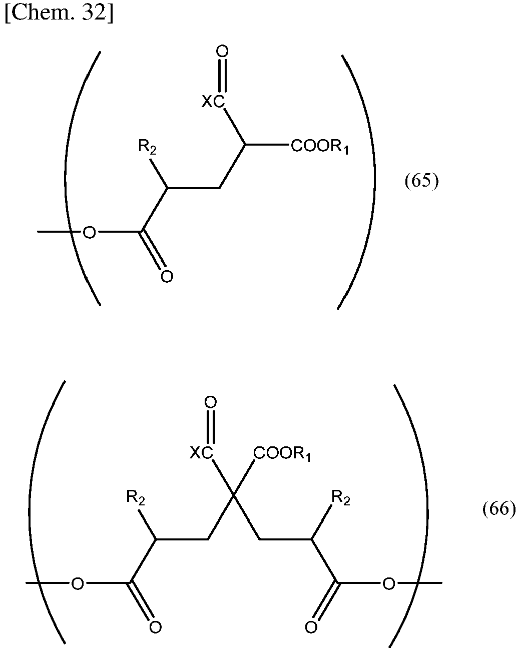

In the above-mentioned reaction, by using an acrylic acid derivative having two or more unsaturated bonds as a raw material, an ester compound having two or more of the structure represented by the above-mentioned General formula (65) and/or (66) in the molecule can be obtained.

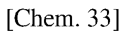

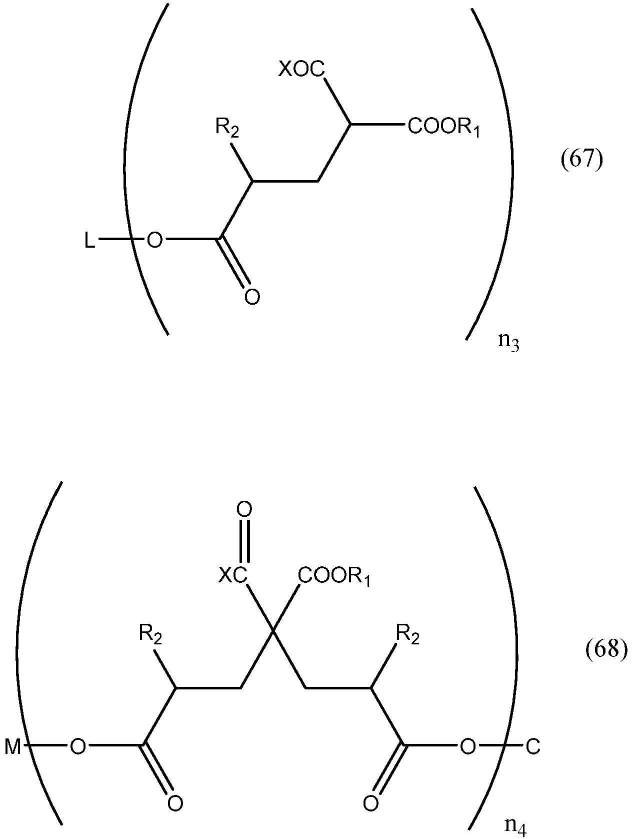

That is, having the structure represented by the above-mentioned General formula (67) (68) in the molecule, can be preferably used in the present invention. Such a compound is preferable because it has high transesterification reactivity and can obtain good curability because of many COOR groups in the molecule.

Most preferably, n₃ and n₄ in the above-mentioned general formula are 2 to 12. L and M are not particularly limited as long as the compound has a molecular weight of 3000 or less, and represent a hydrocarbon group which may has an arbitrary functional group such as a hydroxyl group, an ester group, and an ether group.

The compound obtained by the addition reaction of the compound having an active methylene group with a vinyl group may be one having two or more structures represented by the above-mentioned General formula (67) and/or the above-mentioned General formula (68) in one molecule, which is obtained by using a compound having two or more unsaturated bonds in one molecule as a raw material.

Many compounds having a structure derived from a ester of a compound having an active methylene group are known, but the compound having the above-mentioned structure is particularly preferred because the addition reaction of malonic acid ester or acetoacetic acid ester with vinyl group can be easily promoted, and the compound can be easily synthesized, and the ester group number can be adjusted by selecting the starting raw material so that the curing performances and the resin performances after curing can be easily adjusted.

Specifically, dimethyl malonate, diethyl malonate, di-n-butyl malonate, methyl acetoacetate, ethyl acetoacetate and the like can be suitably used.

Such a compound is obtained by performing a Michael addition reaction with a compound having an active methylene group using various(meth)acrylic acid derivatives having two or more unsaturated bonds as raw materials. The "(meth) acrylic acid derivative having one or more unsaturated bonds" is not particularly limited, and examples thereof include the following.

Such a compound is obtained by performing a Michael addition reaction with a compound having an active methylene group using various (meth)acrylic acid derivatives having one or more unsaturated bonds as raw materials. The above-mentioned "(meth) acrylic acid derivatives having one or more unsaturated bonds" is not particularly limited, and examples thereof may include the following.

Examples of(meth)acrylate having a functional group include methyl(meth)acrylate, ethyl(meth)acrylate, isopropyl(meth)acrylate, n-butyl(meth)acrylate, isobutyl(meth)acrylate, sec-butyl(meth)acrylate, t-butyl(meth)acrylate and the like.

Examples of the(meth)acrylate having two functional groups include 1,4-butanediol di(meth)acrylate, 1,3-butanediol di(meth)acrylate, 1,6-hexanediol di(meth)acrylate, ethylene glycol di(meth)acrylate, diethylene glycol di(meth)acrylate, triethylene glycol di(meth)acrylate, polyethylene glycol di(meth)acrylate, dipropylene glycol di(meth)acrylate, tripropylene glycol di(meth)acrylate, polypropylene glycol di(meth)acrylate, neopentyl glycol di(meth)acrylate, hydroxypivalic acid neopentylglycol di(meth)acrylate, 1,6-hexanediol di(meth)acrylate, 1,9-nonanediol di(meth)acrylate, 1,10-decanediol di(meth)acrylate, glycerin di(meth)acrylate, dimethylol-tricyclodecane di(meth)acrylate (DCP-A), EO adduct diacrylate of bisphenol A (Kyoeisha Chemical Co., Ltd.; Light Acrylate BP-4EA, BP-10EA), and PO adduct diacrylate of bisphenol A (Kyoeisha Chemical Co., Ltd.; BP-4PA, BP-10PA). Among them, PO adduct diacrylate of bisphenol A (Kyoeisha Chemical Co., Ltd.; BP-4PA), dimethylol-tricyclodecane di(meth)acrylate (DCP-A) and the like can be preferably used.

Examples of the(meth)acrylate having three functional groups include trimethylolmethane tri(meth)acrylate, trimethylolpropane tri(meth)acrylate, trimethylolpropane ethylene oxide-modified tri(meth)acrylate, trimethylolpropane propylene oxide-modified tri(meth)acrylate, pentaerythritol tri(meth)acrylate, glycerin propoxy tri(meth)acrylate, tris (2-(meth)acryloyloxyethyl) isocyanurate and the like. Among them, trimethylolpropane trimethacrylate, pentaerythritol trimethacrylate and the like can be preferably used.

Examples of the (meth)acrylate having four functional groups include dipentaerythritol tetra(meth)acrylate, pentaerythritol tetra(meth)acrylate, pentaerythritol ethylene oxide-modified tetra(meth)acrylate, pentaerythritol propylene oxide-modified tetra(meth)acrylate, and ditrimethylolpropane tetra(meth)acrylate. Among them, ditrimethylolpropane tetra(meth)acrylate, pentaerythritol tetra(meth)acrylate and the like can be preferably used.

Examples of (meth)acrylates having four or more functional groups include polyfunctional(meth)acrylates such as pentaerythritol tetra(meth)acrylate, pentaerythritol ethylene oxide-modified tetra(meth)acrylate, ditrimethylolpropane tetra(meth)acrylate, dipentaerythritol tetra(meth)acrylate, dipentaerythritol penta(meth)acrylate, ditrimethylolpropane penta(meth)acrylate, propionic acid-modified dipentaerythritol penta(meth)acrylate, dipentaerythritol hexa(meth)acrylate, ditrimethylolpropane hexa(meth)acrylate, and hexa(meth)acrylate of caprolactone modified dipentaerythritol.

In a case where a functional group other than an alkyl ester group is introduced, examples thereof include (meth)acrylic acid, hydroxy(meth)acrylic acid, glycidyl(meth)acrylic acid, and the like. These can also be used in various forms in terms of a self-crosslinking property, adhesion, compatibility, and reaction points with other curing systems.

### (3-2) Compound obtained by reaction between compound having active methylene group and halogen-containing compound

A compound obtained in this manner can also be suitably used in the present invention. In particular, examples thereof may include compounds in which carbonyl carbon of an ester group is directly halogenated. Halogen is not particularly limited, and examples thereof may include chlorine, bromine, iodine, and the like.

Examples of such a compound may include compounds obtained by a reaction formula represented by the following General formula (15). 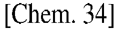 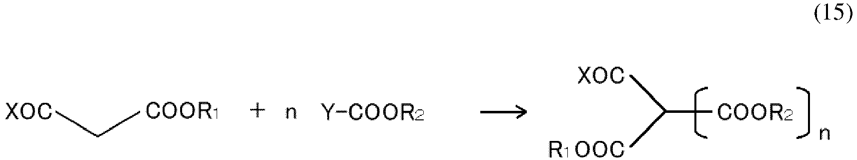 R₁ and R₂ are primary or secondary alkyl groups having 50 or less carbon atoms (R₁ and R₂ may be the same), X is a hydrocarbon group having 5 or less carbon atoms or a -ORi group, Y is halogen, and n is 1 or 2.

A specific example of a compound corresponding to a compound obtained as a derivative of a compound having the above-mentioned active methylene group is shown below. 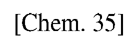 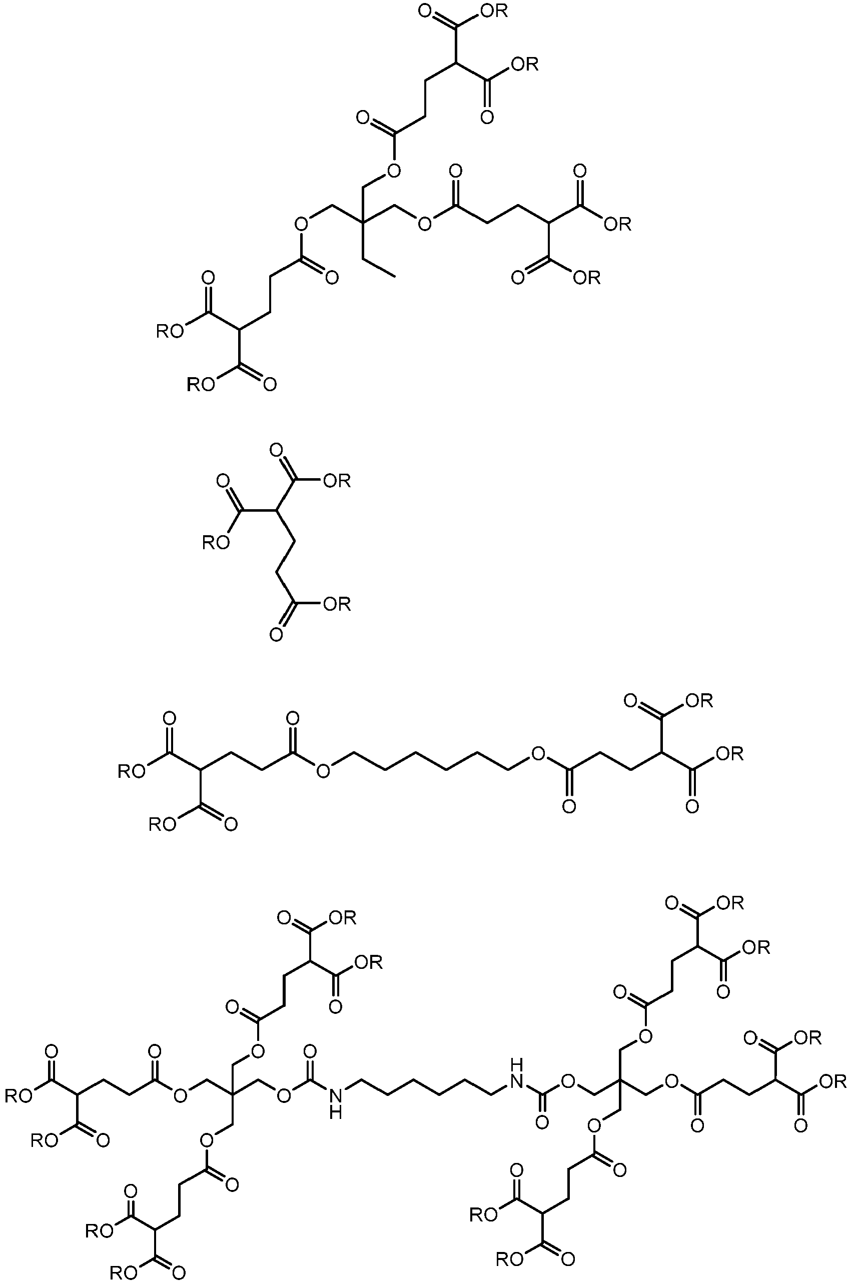 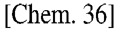 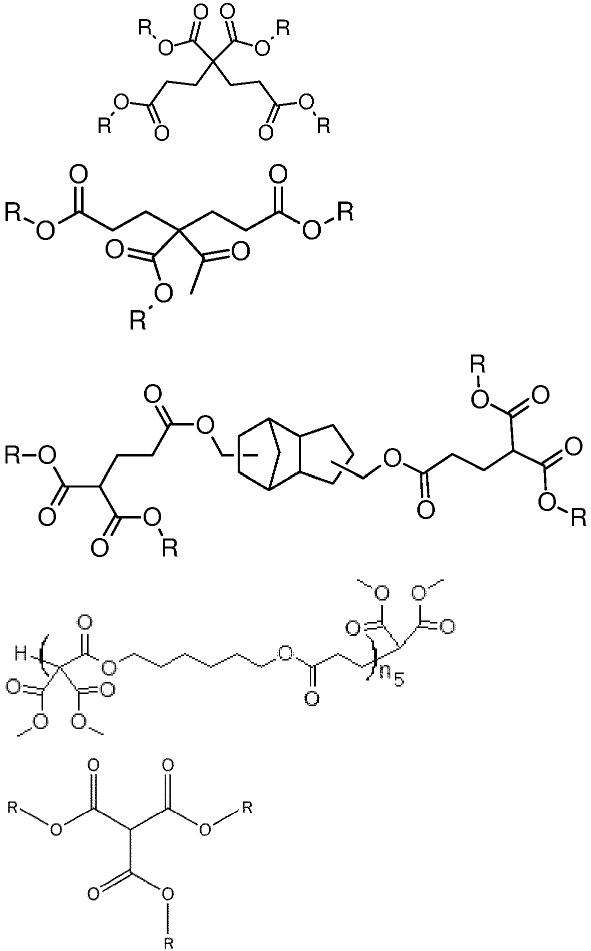 In the formulas, R represents an alkyl group having 50 or less carbon atoms. In addition, n₅ represents 1 to 10.

It is preferable that some or all of the above-mentioned compounds have three or more alkyl esters serving as crosslinking points in a molecule. That is, as the number of alkyl ester groups in a molecule increases, the crosslinking density of a resin after curing becomes higher, and thus the hardness of a cured material is improved, and the cured material having excellent physical properties is obtained, which is preferable.

In addition, the above-mentioned compound may have both an alkyl ester group and a hydroxyl group in a molecule. The compound having both the groups is preferable in that crosslinking density can be increased because self-crosslinking between crosslinking agents occurs at the same time as the crosslinking of polyol. It is more preferable that the number of alkyl esters in a molecule is 5 or more.

### (4) Alkyl ester of polyfunctional carboxylic acid

A compound obtained by a reaction between a polyfunctional carboxylic acid and an alcohol can also be used as a compound having an alkyl ester group of the present invention. Such a reaction can be represented by the following general formula.

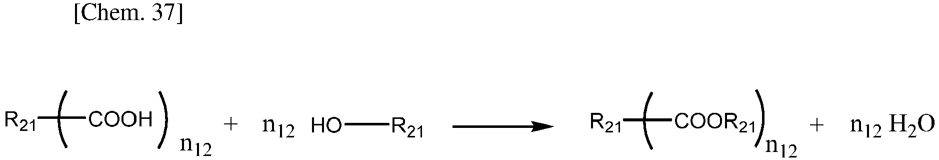

Meanwhile, a compound having an alkyl ester group obtained by performing the same reaction on carboxylic acid derivatives can also be used for the object of the present invention.

Various polyfunctional carboxylic acids are general-purpose raw materials and inexpensively provided in many applications such as polyester raw materials, polyamide raw materials, neutralizing agents, synthetic raw materials and the like. Compounds obtained by alkyl esterification of such polyfunctional carboxylic acids by a known method can also be used in the present invention. The esterification can be carried out by the above-mentioned alkyl group having 50 or less carbon atoms.

When such a compound is used as the ester compound (A), it can be esterified inexpensively by a known method and a polyvalent ester group can be introduced with a relatively low molecular weight. Further, by esterification, the compatibility with an organic solvent is improved, so that it is preferred that it can be suitably used.

The polyfunctional carboxylic acid to be used herein is not particularly limited, and for example, a polyfunctional carboxylic acid having 50 or less carbon atoms can be used.

More specifically, examples thereof may include aliphatic polyvalent carboxylic acids such as maronic acid, succinic acid, glutaric acid, adipic acid, pimelic acid, suberic acid, azelaic acid, sebacic acid, undecanedioic acid, dodecanedioic acid, brassiric acid, octadecanedioic acid, citric acid, butanetetracarboxylic acid, and methanetricarboxylic acid; alicyclic polyvalent carboxylic acids such as 1,2-cyclohexanedicarboxylic acid, 1,3-cyclohexanedicarboxylic acid, 1,4-cyclohexanedicarboxylic acid, 4-cyclohexene-1,2-dicarboxylic acid, 3-methyl-1,2-cyclohexanedicarboxylic acid, 4-methyl-1,2-cyclohexanedicarboxylic acid, 1,2,4-cyclohexanetricarboxylic acid, and 1,3,5-cyclohexanetricarboxylic acid; aromatic polyvalent carboxylic acids such as phthalic acid, isophthalic acid, terephthalic acid, naphthalenedicarboxylic acid, 4,4'-biphenyldicarboxylic acid, trimellitic acid, and pyromellitic acid; and the like.

Examples of the hydroxy carboxylic acid having a carboxyl group and a hydroxyl group may include hydroxycarboxylic acids such as glycolic acid, citric acid, lactic acid, 3-hydroxybutanoic acid, and 3-hydroxy-4-ethoxybenzoic acid; and the like.

In the present invention, an alkyl esterification method for the above-mentioned polyfunctional carboxylic acid is not particularly limited, and a known method such as dehydration condensation with alcohol can be applied. In addition, an alkyl esterification method for derivatives of the polyfunctional carboxylic acid can also be applied.

The alkyl ester of polyfunctional carboxylic acid corresponding to the above-mentioned (A-3) preferably has a molecular weight of 10,000 or less. It is preferable in view of the fact that molecules are easy to move and curing progresses. The molecular weight can be made lower molecular weight such as 6,000 or less, 4000 or less, and 2000 or less.

### (5) Compound containing two or more functional groups represented by General formula (31)

A compound having two or more functional groups represented by the above-mentioned General formula (31) can also be used in the present invention.

A functional group represented by General formula (31) has been described above in detail. Such a functional group is formed by reacting a compound represented by General formula (32) with a carboxylic acid. Thus, when various known polycarboxylic acids are reacted with the above-mentioned compound represented by General formula (32), a compound having two or more functional groups represented by the above-mentioned General formula (31) can be obtained. Further, in the case of a reaction with a hydroxy carboxylic acid having a hydroxyl group, a compound having a hydroxyl group and General formula (32) is obtained, and this can also be used as a component of an aqueous thermosetting resin composition on which a curing reaction through transesterification is performed.

In order to use the above-mentioned compound for the aqueous thermosetting resin composition of the present invention, the compound is preferably a compound having two or more functional groups, and examples thereof may include a polycarboxylic acid having two or more carboxyl groups, a hydroxy carboxylic acid having a carboxyl group and a hydroxyl group, and the like.

Various polycarboxylic acids are general-purpose raw materials that are widely and inexpensively provided in many applications such as polyester raw materials, polyamide raw materials, neutralizers, and synthetic raw materials. A compound in which such polycarboxylic acid is substituted with a functional group represented by the above-mentioned General formula (32) by a known method can also be used in the present invention.

When such a compound is used as a compound having a functional group represented by General formula (32), the compound can be esterified at low cost by a known method, and a multivalent ester group can be introduced with a relatively low molecular weight. In addition, compatibility with an organic solvent is improved by esterification, and thus the compound can be suitably used, which is preferable.

Polycarboxylic acid to be used herein is not particularly limited, and for example, polycarboxylic acid having 50 or less carbon atoms can be used.

More specifically, examples thereof may include a polyfunctional carboxylic acid exemplified as the raw materials of the above-mentioned "(4) alkyl ester of polyfunctional carboxylic acid".

It is preferable that a compound in which a carboxylic acid group of the above-mentioned polycarboxylic acid is substituted with a structure represented by the above-mentioned General formula (31) has a molecular weight of 10,000 or less. Such a compound is preferable in that molecules move easily and curing proceeds. A molecular weight may also be set to be a lower molecular weight such as 6,000 or less, 4,000 or less, or 2,000 or less.

Meanwhile, as an example of such a compound, a general structure of a compound when the above-mentioned reaction has been performed using citric acid as polycarboxylic acid is shown below.

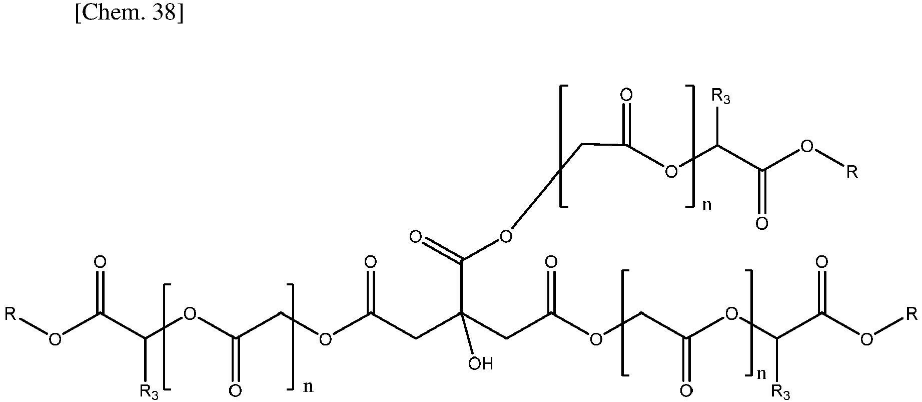

In the formula, R represents an alkyl group having 50 or less carbon atoms.

(6) Compound having a functional group represented by General formula (41) and/or two or more functional groups represented by General formula (42)

A compound having a functional group represented by General formula (41) and/or a functional group represented by General formula (42) can be obtained by the above-mentioned manufacturing method.

A compound having two or more of such functional groups and a compound having such a functional group and a hydroxyl group can be suitably used as components of a resin composition of which a transesterification reaction is a curing reaction.

A compound having a functional group represented by General formula (41) and/or a functional group represented by General formula (42) is used as a curable functional group in a curable resin composition. Thus, it is preferable that the compound have two or more functional groups. More specifically, the compound may be a compound having two or more of functional groups represented by the above-mentioned General formula (41) and/or functional groups represented by General formula (42), or may be a compound having a hydroxyl group and the like, in addition to the functional group represented by the above-mentioned General formula (41) and/or a functional group represented by the functional group represented by General formula (42).

As described above, the functional group represented by the above-mentioned General formula (41) and/or the functional group represented by General formula (42) can be introduced by performing a reaction represented by General formula (51) or a reaction represented by General formula (54) on various epoxy compounds.

Thus, a compound obtained by performing a reaction represented by the above-mentioned General formula (54) on a known epoxy compound can also be used in the present invention.

An epoxy compound that can be used in such a reaction is not particularly limited, and examples thereof may include an aliphatic polyfunctional liquid epoxy resin, a bisphenol A type epoxy resin, a bisphenol F type epoxy resin, a biphenyl type epoxy resin, a phenol novolac type epoxy resin, a cresol novolac type epoxy resin, a bisphenol derivative epoxy resin, a naphthalene skeleton or alicyclic skeleton-containing novolac epoxy resin, and the like, and may include an epoxy resin whose oxylan ring is glycidyl ether, and the like.

It is preferable that the above-mentioned epoxy compounds be each a compound having two or more epoxy groups in one molecule.

Further, an epoxy compound can be obtained by performing a reaction represented by General formula (53) on the carboxylic acid or derivatives thereof as described above.

Then, a compound having a functional group represented by General formula (41) and/or a functional group represented by General formula (42) can be obtained by performing a reaction represented by the above-mentioned General formula (51) on the epoxy compound.

Thus, it is possible to obtain a compound having such two or more functional groups or a compound having such a functional group and a hydroxyl group by performing the above-mentioned reaction on various polycarboxylic acids and hydroxy carboxylic acids.

Polycarboxylic acid that can be used as a raw material at the time of obtaining a compound having a functional group represented by General formula (41) and/or a functional group represented by General formula (42) by the above-mentioned reaction is not particularly limited, and for example, polycarboxylic acid having 50 or less carbon atoms can be used.

More specifically, examples thereof may include the polyfunctional carboxylic acid exemplified as a raw material of the above-mentioned "(4) alkyl ester of polyfunctional carboxylic acid".

Further, in the case of a structure represented by the above-mentioned General formula (41), a compound having both a hydroxyl group and an alkyl ester group is obtained, and thus fatty acids such as coconut oil fatty acid, cottonseed oil fatty acid, hemp oil fatty acid, rice bran oil fatty acid, fish oil fatty acid, Tall oil fatty acid, soybean oil fatty acid, linseed oil fatty acid, tung oil fatty acid, rapeseed oil fatty acid, castor oil fatty acid, dehydrated castor oil fatty acid, safflower oil fatty acid; and monocarboxylic acids such as lauric acid, myristic acid, palmitic acid, stearic acid, oleic acid, linoleic acid, linolenic acid, benzoic acid, p-tert-butylbenzoic acid, cyclohexanoic acid, and 10-phenyloctadecanoic acid can also be used.

Examples of the hydroxy carboxylic acids having a carboxyl group and a hydroxyl group that can be used as a raw material at the time of obtaining a compound having a functional group represented by General formula (41) and/or a functional group represented by General formula (42) by the above-mentioned reaction may include hydroxycarboxylic acids such as glycolic acid, citric acid, lactic acid, 3-hydroxybutanoic acid, and 3-hydroxy-4-ethoxybenzoic acid; and the like.

Specific examples of such a compound may include compounds having a structure which is shown below.

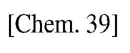

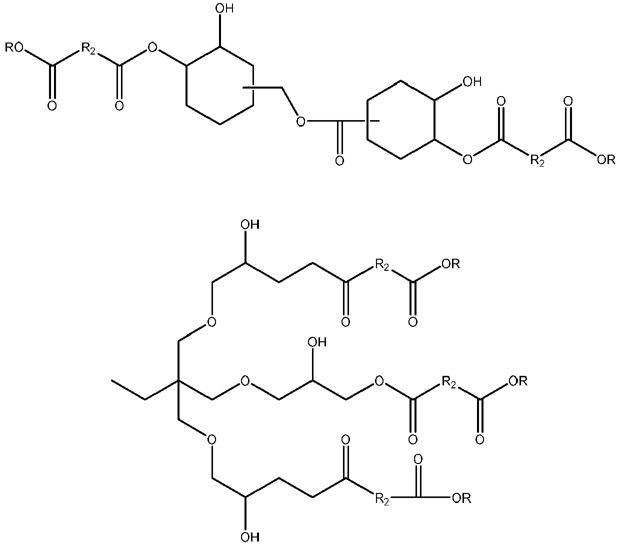

In the formulas, R represents an alkyl group having 50 or less carbon atoms.

### (7) Low molecular weight polyol

The above-mentioned compound (E) is not limited to the above-mentioned resin, and a low molecular weight polyol (specifically, molecular weight of 2,000 or less) can also be used.

As the low molecular weight polyol, for example, dihydric alcohols such as ethylene glycol, propylene glycol, diethylene glycol, trimethylene glycol, tetraethylene glycol, triethylene glycol, dipropylene glycol, 1,4-butanediol, 1,3-butanediol, 2,3-butanediol, 1,2-butane diol, 2-methyl-1,3-propanediol, 3-methyl-1,2-butanediol, 1,1,1-trimetyrolpropane, 2-butyl-2-ethyl-1,3-propanediol, 1,2-pentanediol, 1,5-pentanediol, 1,4-pentanediol, 2,4-pentanediol, 2,3-dimethyltrimethylene glycol, tetramethylene glycol, 3-methyl-4,3-pentanediol, 3-methyl-1,5-pentanediol, 2,2,4-trimethyl-1,3-pentanediol, 1,6-hexanediol, 1,5-hexanediol, 1,4-hexanediol, 2,5-hexanediol, neopentyl glycol, 1,4-cyclohexanedimethanol, tricyclodecanedimethanol, hydroxypivalic acid neopentyl glycol ester, hydrogenated bisphenol A, hydrogenated bisphenol F, and dimethylolpropionic acid; polylactone diol obtained by adding a lactone compound such as ε-caprolactone to the dihydric alcohol; ester diol compounds such as bis (hydroxyethyl) terephthalate; polyether diol compounds such as alkylene oxide adducts of bisphenol A, polyethylene glycol, polypropylene glycol and polybutylene glycol; trihydric or higher alcohol such as glycerin, trimethylolethane, trimethylolpropane, diglycerin, triglycerin, 1,2,6-hexanetriol, pentaerythritol, dipentaerythritol, tris (2-hydroxyethyl) isocyanuric acid, sorbitol, and mannitol.

Such low molecular weight polyol is known as a general-purpose product and can be obtained at low cost. Further, the low molecular polyol has high water solubility and can be suitably used as a crosslinking agent for the purpose of curing in an aqueous system.

Dissolution or dispersion of the above-mentioned (3) to (7) in an aqueous medium can be performed by a method of performing dilution in a water-soluble solvent and addition, or by emulsification and dispersion using an emulsifier. In this case, examples thereof may include a method of performing emulsification and dispersion using an emulsifier after performing mixing with other components to be used in combination, a method of preparing a dispersion element in which only the above-mentioned compound is emulsified and dispersed using an emulsifier and mixing this with other components, and the like. In addition, examples of equipment used for emulsification and demarcation include a homomixer, a high-pressure homogenizer, a disper mixer, a ribbon mixer, a propeller mixer, and there is a method such as high-pressure emulsification.

### (Transesterification catalyst (B))

The aqueous thermosetting resin composition of the present invention contains a transesterification catalyst (B). That is, in order to efficiently cause a transesterification reaction between an ester group and a hydroxyl group and obtain sufficient thermosetting property, the transesterification catalyst (B) is mixed.

As the above-mentioned transesterification catalyst (B), any known compound that can activate a transesterification reaction can be used.

Specifically, examples thereof may include various acidic compounds such as hydrochloric acid, sulfuric acid, nitric acid, acetic acid, phosphoric acid or sulfonic acid, and heteropolyacids; various basic compounds such as LiOH, KOH or NaOH, amines, and phosphines; various metal compounds such as PbO, magnesium oxide, zinc acetate, zinc acrylate, zinc acetylacetonate, zinc oxide, lead acetate, manganese acetate, copper acetate, nickel acetate, palladium acetate, aluminum isopropylate, alumina, zirconium acetylacetonate, zirconium oxide, iron chloride, cobalt chloride, palladium chloride, zinc dithiocarbamate, antimony trioxide, tetraisopropyl titanate, titanium oxide, dibutyltin dilaurate, dibutyltin dioctate, dioctyltin diacetate, monobutyltin oxide, or monobutyltin acid; quaternary ammonium salts such as tetramethylammonium chloride, dodecyltrimethylammonium bromide, triethylbenzylammonium chloride, tetramethylammonium hydroxide, and trimethylbenzylammonium methylcarbonate, phosphonium salts such as tetrabutylphosphonium bromide and tetrabutylphosphonium hydroxide, strong bases such as 1,8-diazabicyclo [5.4.0] undecene-7, and the like. In addition, photoresponsive catalysts and thermal latent catalysts that generate acid by light or heat can also be used. Further, a zinc cluster catalyst (for example, ZnTAC24 (trade name) manufactured by Tokyo Chemical Industry Co., Ltd.) and the like can also be used.

Further, among the above-mentioned compounds, two or more types may be used in combination.

In the present invention, it is most preferable that a metal compound catalyst be used as a transesterification catalyst. The transesterification reactivity of the metal compound catalyst can be obtained by selecting a metal species, using the metal compound catalyst in combination with other compounds, or the like. Further, required performance can be appropriately obtained in combination with a resin composition, which is preferable.

It is preferable that the above-mentioned metal compound catalyst be a compound (B-1) containing at least one metal element selected from the group consisting of zinc, tin, titanium, aluminum, zirconium and iron. Such compounds have a suitable transesterification reactivity, which is preferable. Among them, zinc, tin, and zirconium are preferable because they have particularly excellent transesterification reactivity.

In the above-mentioned metal compound, when metal acetylacetonate is used as an anion component, a more excellent transesterification ability than that of the same type of metal compound tends to be obtained, which is preferable. For example, zinc acetylacetoneate and zirconium acetylacetoneate can be used particularly suitably. In particular, zirconium acetylacetoneate exhibits extremely good catalytic performance.

In a case where the above-mentioned metal compound is used as a catalyst and at least one compound (B-2) selected from the group consisting of an organophosphorus compound, urea, alkylated urea, a sulfoxide compound, pyridine, and pyridine derivatives is used in combination, catalyst performance is improved, which is more preferable.

The use of a metal compound activated by using these compounds in combination is particularly preferable in that the above-mentioned curing start temperature and gel fraction can be obtained.

Although an action for obtaining such an effect is not clear, it is presumed that the coordination of the compound (B-2) with a metal compound improves the catalytic activity. Therefore, as the compound (B-2), it is preferable to select a compound that can be coordinated with a metal compound.

The above-mentioned organophosphorus compound is not particularly limited, and examples thereof may include phosphoric acid, phosphorous acid, phosphonic acid, phosphinic acid, phosphonous acid, organic phosphine oxide, organic phosphine compounds and their various esters, amides, and salts. Ester may be ester of alkyl, branched alkyl, substituted alkyl, bifunctional alkyl, alkyl ether, aryl, and substituted aryl. Amide may be amide of alkyl, branched alkyl, substituted alkyl, bifunctional alkyl, alkyl ether, aryl, and substituted aryl.

Among these, at least one compound selected from the group consisting of phosphonate ester, phosphate amide, and an organic phosphine oxide compound is particularly preferable. The most satisfactory transesterification catalyst function is obtained by using these organophosphorus compounds. Further specifically, organic phosphine oxide compounds such as triphenylphosphine oxide, trioctylphosphine oxide, and tricyclohexylphosphine oxide; phosphate amide compounds such as hexamethylphosphoric acid triamide and tris (N, N-tetramethylene) phosphate triamide, organic phosphine sulfide compounds such as triphenylphosphine sulfide, tributylphosphine sulfide, and trioctylphosphine sulfide, and the like can be suitably used.

The above-mentioned alkylated urea is not particularly limited, and examples thereof may include urea, dimethylurea, dimethylpropylene urea, and the like. Meanwhile, alkylated urea may have a cyclic structure as in dimethylpropylene urea or the like.

The above-mentioned alkylated thiourea is not particularly limited, and examples thereof may include dimethyl thiourea, and the like.

Examples of above-mentioned sulfoxide compound may include dimethyl sulfoxide, diphenyl sulfoxide, and the like.

Examples of the above-mentioned pyridine derivative may include quinoline, isoquinoline, nicotinic acid ester, and the like.

It is preferable that a transesterification catalyst of the present invention contain the compound (B-1) and the compound (B-2) at a ratio of (B-1):(B-2) = 100:1 to 1:100 (weight ratio). Particularly suitable results can be obtained by mixing the compounds at such a ratio. The above-mentioned lower limit is more preferably 50:1 and further preferably 10:1. The above-mentioned upper limit is more preferably 1:50 and further preferably 1:10.

It is preferable that the above-mentioned compound (B-1) be contained in a proportion of 0.01 to 50% by weight with respect to the amount of a compound related to a reaction in a reaction system at the time of causing a reaction.

It is preferable that the above-mentioned compound (B-2) be contained in a proportion of 0.01 to 50% by weight with respect to the amount of a compound related to a reaction in a reaction system at the time of causing a reaction.

Further, in the aqueous thermosetting resin composition of the present invention, a satisfactory curing reaction can be caused without using an acid catalyst, and thus the aqueous thermosetting resin composition can be configured as an aqueous thermosetting resin composition having a basic compound added thereto, which is preferable.

That is, an amine compound may be used as an additive such as a pigment dispersant. Further, when a coating material is made aqueous, introducing an acid group such as a carboxylic acid group or a sulfonic acid group into a resin and neutralizing it with an amine compound or the like to make the coating material water-soluble have been widely performed. In this case, combination use with an acidic catalyst was difficult. This has been a problem that hinders a thermosetting resin composition, using an esterification catalyst as a curing reaction, from being made aqueous. In the present invention, curing can be performed even under basic conditions.

Further, in the aqueous thermosetting resin composition of the present invention, a satisfactory curing reaction can be caused without using an acid catalyst, and thus the aqueous thermosetting resin composition can be configured as a thermosetting resin composition having a basic compound added thereto, which is preferable.

That is, an amine compound may be used as an additive such as a pigment dispersant. Further, when a coating material is made aqueous, introducing an acid group such as a carboxylic acid group or a sulfonic acid group into a resin and neutralizing it with an amine compound or the like to make the coating material water-soluble have been widely performed. In this case, combination use with an acidic catalyst was difficult. This has been a problem that hinders a thermosetting resin composition, using an esterification catalyst as a curing reaction, from being made aqueous. In the present invention, curing can be performed even under basic conditions, and thus aqueousness can be achieved.

The aqueous thermosetting composition of the present invention may further be used in combination with other crosslinking agents commonly used in the fields of coating materials and adhesives in addition to the above-mentioned components (A) and (B). The crosslinking agent that can be used is not particularly limited, and examples thereof include an isocyanate compound, a blocked isocyanate compound, a melamine resin, an epoxy resin, a silane compound, and the like. In addition, vinyl ether, an anionic polymerizable monomer, a cationic polymerizable monomer, and a radical polymerizable monomer, and the like may be used in combination. A curing agent for accelerating the reaction of the used crosslinking agent may be used in combination.

Meanwhile, the above-mentioned other crosslinking agents are not essential agents, and the aqueous thermosetting resin composition of the present invention is preferable in that it is possible to obtain satisfactory curability even when the aqueous thermosetting resin composition does not contain the above-mentioned other crosslinking agents.

In a case where the crosslinking agent is a polyisocyanate compound and/or a melamine resin, it is preferable that a mixing amount with respect to a total amount of a resin component (A) and the crosslinking agent (that is, (the amount of a crosslinking agent)/(the amount of the crosslinking agent + the amount of a resin component) be 0.01 to 50% by weight. The range of such a mixing amount is preferable in that a curing reaction based on a transesterification reaction and a curing reaction based on another curing agent can be caused at the same time.

The above-mentioned lower limit is more preferably 0.01% by weight and further preferably 1% by weight. The above-mentioned upper limit is more preferably 30% by weight and further preferably 20% by weight.

The aqueous thermosetting resin composition of the present invention can be suitably used in the fields of thermosetting coating materials, thermosetting adhesives, and the like.

In a case where the aqueous thermosetting resin composition is used as a thermosetting coating material, an additive which is generally used in the field of coating materials, other than the above-mentioned components, may be used in combination. For example, additives for coating materials such as a leveling agent, a defoaming agent, a coloring pigment, an extender pigment, a bright pigment, a pigment dispersant, a rheology control agent, a UV absorber, a thickener, an ultraviolet absorber, a light stabilizer, a defoaming agent, a plasticizer, a surface adjuster, an anti-settling agent, a dispersant, an anti-color separation agent, a base material wetting agent, and a slip agent may be further contained. In addition, any combinations thereof may be used in combination.

When a pigment is used, it is preferably contained in a total amount of 1 to 500% by weight, based on 100% by weight of the total solid content of the resin component. The lower limit is more preferably 3% by weight, and still more preferably 5 parts by weight. The upper limit is more preferably 400% by weight, and still more preferably 300% by weight.

Examples of the coloring pigment include titanium oxide, zinc white, carbon black, molybdenum red, prussian blue, cobalt blue, azo pigment, phthalocyanine pigment, quinacridone pigment, isoindoline pigment, threne pigment, perylene pigment, dioxazine type pigment, diketopyrrolopyrrole type pigment, and the like, and any combination thereof.

Examples of the extender pigment include clay, kaolin, barium sulfate, barium carbonate, calcium carbonate, talc, silica, alumina white and the like, and barium sulfate and/or talc is preferable, and barium sulfate is more preferable.

Examples of the bright pigment include, for example, aluminum oxide coated with aluminum (including vapor-deposited aluminum), copper, zinc, brass, nickel, aluminum oxide, mica, titanium oxide or iron oxide, mica coated with titanium oxide or iron oxide, glass flakes, hologram pigments, and the like, and any combinations thereof. The aluminum pigment includes nonleafing type aluminum and leafing type aluminum.

It is preferable that the above-mentioned coloring pigment be mixed in the aqueous thermosetting resin composition in a state where the coloring pigment is dispersed by a pigment-dispersed resin. The amount of the coloring pigment may change depending on the type of pigment or the like, but generally, is preferably in the range of approximately 0.1 to approximately 300 parts by mass with respect to 100 parts by mass of the solid content of a resin component contained in the pigment-dispersed resin, and more preferably in the range of approximately 1 to approximately 150 parts by mass.

Examples of the thickener include inorganic thickeners such as silicate, metal silicate, montmorillonite, colloidal alumina and the like; polyacrylic acid thickeners such as copolymers of(meth)acrylic acid and(meth)acrylic acid ester, and sodium polyacrylate; associative type thickener having a hydrophilic part and a hydrophobic part in one molecule and showing a thickening effect by an adsorption of the hydrophobic portion on the surface of the pigment or emulsion particle in the coating material, or an association of the hydrophobic parts, in an aqueous medium; cellulose derivative thickeners such as carboxymethylcellulose, methylcellulose, hydroxyethylcellulose and the like; protein type thickeners such as casein, sodium caseinate, ammonium caseinate and the like; alginic acid thickeners such as sodium alginate; polyvinyl thickeners such as polyvinyl alcohol, polyvinyl pyrrolidone, polyvinyl benzyl ether copolymers; polyether thickeners such as pluronic polyethers, polyether dialkyl esters, polyether dialkyl ethers, polyether epoxy modified products and the like; maleic anhydride copolymer type thickener such as a partial ester of vinyl methyl ether-maleic anhydride copolymer; polyamide type thickeners such as a polyamide amine salt, and the like, and any combination thereof.

The polyacrylic acid thickener is commercially available, and examples thereof include "ACRYSOLASE-60", "ACRYSOLTT-615", and "ACRYSOLRM-5" (trade names) manufactured by Rohm and Haas Company, and "SN Thickener 613", "SN Thickener 618", "SN Thickener 630", "SN Thickener 634", and "SN Thickener 636" (trade names) manufactured by San Nopco CO., LTD.

The associative type thickener is commercially available, and examples thereof include "UH-420", "UH-450", "UH-462", "UH-472", "UH-540", "UH-752", "UH-756VF", and "UH-814N" (trade names) manufactured by ADEKA Corporation, "ACRYSOLRM-8W", "ACRYSOLRM-825", "ACRYSOLRM-2020NPR", "ACRYSOLRM-12W", and "ACRYSOLSCT-275" (trade names) manufactured by Rohm and Haas Company, "SN Thickener 612", "SN Thickener 621 N", "SN Thickener 625 N", "SN Thickener 627 N", and "SN Thickener 660 T" (trade names) manufactured by san nopco CO., LTD. and the like.

It is preferable to use an acrylic pigment-dispersed resin as the above-mentioned pigment-dispersed resin. More specifically, examples thereof may include an acrylic resin obtained by polymerizing a polymerizable unsaturated monomer with a polymerization initiator in the presence of a hydrophilic organic solvent.

Examples of the above-mentioned polymerizable unsaturated monomer may include compounds exemplified in the above-mentioned synthesis of a resin, and the compounds can be used in appropriate combinations.

The above-mentioned pigment-dispersed resin is preferably a resin that can be dissolved or dispersed in water. Specifically, the pigment-dispersed resin has a hydroxyl value of preferably 10 to 100 mgKOH/g and more preferably 20 to 70 mgKOH/g, and has an acid value of preferably 10 to 80 mgKOH/g and more preferably 20 to 60 mgKOH/g.

Examples of the above-mentioned hydrophilic organic solvent used for the above-mentioned polymerization may include alcoholic organic solvents such as methanol, ethanol, isopropanol, n-butanol, and isobutanol; ether-based organic solvents such as dioxane and tetrahydrofuran; ethylene glycol ether-based organic solvents such as ethylene glycol monomethyl ether, ethylene glycol monoethyl ether, ethylene glycol mono n-propyl ether, ethylene glycol monoisopropyl ether, ethylene glycol mono n-butyl ether, ethylene glycol monoisobutyl ether, and ethylene glycol monotert-butyl ether; diethylene glycol ether-based organic solvents such as diethylene glycol monomethyl ether, diethylene glycol monoethyl ether, diethylene glycol mono n-propyl ether, diethylene glycol monoisopropyl ether, diethylene glycol mono n-butyl ether, diethylene glycol monoisobutyl ether, and diethylene glycol monotert-butyl ether; propylene glycol ether-based organic solvents such as propylene glycol monomethyl ether, propylene glycol monoethyl ether, propylene glycol mono n-propyl ether, and propylene glycol monoisopropyl ether; dipropylene glycol ether-based organic solvents such as dipropylene glycol monomethyl ether, dipropylene glycol monoethyl ether, dipropylene glycol mono n-propyl ether, and dipropylene glycol monoisopropyl ether; ester-based organic solvents such as ethyl acetate, butyl acetate, isobutyl acetate, and 3-methoxybutyl acetate, and combinations thereof.

It is preferable that the aqueous thermosetting resin composition of the present invention contain a pigment-dispersed resin of preferably 5 to 70% by mass, and more preferably 7 to 61 % by mass as a solid content, based on the sum of solid content masses of the above-mentioned resin and pigment-dispersed resin. The above-mentioned ranges are preferable from the point of view of storage stability of aqueous thermosetting resin compounds, and finishing properties, water resistance, intermediate grinding properties, and the like of a colored coating film formed using a colored coating material composition of the present invention.

An object to which the above-mentioned aqueous thermosetting resin composition can be applied is not particularly limited, and various examples thereof may include an outer plate portion of an automobile body such as an automobile, a truck, a motorcycle, and a bus; automobile parts; house electrical products such as a mobile phone and audio device, a building material, furniture, an adhesive, a film and a glass coating agent. In addition, examples thereof may also include pre-coated metal that forms a coating film by high-temperature short-time curing and coating on metal cans. Further, examples thereof may also include electrodeposition coating materials, adhesives, and the use thereof in particle boards, and the like.

The above-mentioned aqueous thermosetting resin composition can also be used as an electrodeposition coating material composition. Examples of the electrodeposition coating materials may include a cationic electrodeposition coating material and an anionic electrodeposition coating material.

The object to be coated may be one obtained by applying a surface treatment such as a phosphate treatment, a chromate treatment, a composite oxide treatment or the like to the metal surface of the metal material and a car body molded therefrom, or may be a substrate to be coated having a coating film.

As the above-mentioned substrate to be coated having the coating film, there can be mentioned a substrate which is subjected to a surface treatment as desired and has an undercoating film formed thereon. In particular, a car body having an undercoating film formed by an electrodeposition coating material is preferable, and a car body having an undercoating film formed by a cationic electrodeposition coating material is more preferable.

The substrate to be coated may be one obtained by subjecting the surface of plastic such as plastic material and automobile part molded therefrom to surface treatment, primer coating or the like as desired. Further, the plastic material and the metal material may be combined.

The method of applying the thermosetting coating is not particularly limited, and examples thereof include an air spray coating, an airless spray coating, a rotary atomization coating, a curtain coating and the like, and air spray coating, rotary atomization coating, and the like are preferable. At the time of coating, electrostatic application may be performed if desired. By the above-mentioned coating method, a wet coating film can be formed from the water-borne coating material composition.

The wet coating film can be cured by heating. The curing can be carried out by a known heating means, for example, a drying oven such as an air-heating furnace, an electric furnace, an infrared induction heating furnace or the like. The wet coating film is preferably cured by heating at a temperature in the range of approximately 80 to approximately 180°C, more preferably approximately 100 to approximately 170°C, and even more preferably approximately 120 to approximately 160°C, and preferably for approximately 10 to approximately 60 minutes, and more preferably for approximately 15 to approximately 40 minutes. It is also preferable in that it can cope with low temperature curing at 80 to 140°C.

The aqueous thermosetting resin composition of the present invention can also be used in a wet-on-wet multilayer coating film forming method. In this case, examples of the method may include a method of coating a coating material made of the aqueous thermosetting resin composition of the present invention, coating another coating material composition thereon in a state where curing is not performed, and baking the two layers of coating films at the same time to form a multilayer coating film, and the like. Further, in such a coating method, as a multilayer coating film having three or more layers, a multilayer coating film may be used in which at least one of the layers is formed from the aqueous thermosetting resin composition of the present invention.

Among them, the aqueous thermosetting resin composition of the present invention can be suitably used as a water-based coating material which is used to form a multilayer coating film according to a wet-on-wet method by steps of water-based coating → drying → solvent clear coating → heat curing.

In a case where the aqueous thermosetting resin composition of the present invention is used to form the above-mentioned multilayer coating film according to a wet-on-wet method, a coating material used for solvent clear coating may be a curing system based on a transesterification reaction, or may be another curing system such as melamine curing or isocyanate curing.

Among them, in solvent clear coating, it is preferable to use a solvent clear coating material using a transesterification reaction as a curing reaction. When such a solvent clear coating material is used, curing reactions of a base coating film and a clear coating film are the same, and thus the curing reactions are not hindered due to the mixing of mutual coating film components. Further, a reaction occurs between the base coating film component and the clear coating film component between layers, and thus satisfactory adhesion can be obtained, which is also preferable.

In a multilayer coating film forming method using a transesterification reaction as a curing reaction in both a base coating film and a clear coating film, when a transesterification catalyst is mixed in only either one of the coating films, both the layers can be cured at the same time, which is preferable.

Meanwhile, in a case where in such a curing reaction according to a wet-on-wet method, a transesterification catalyst is not mixed in an aqueous thermosetting resin composition, but a multilayer coating film is formed by wet-on-wet, and a transesterification catalyst moves from another coating film to thereby proceed with a curing reaction, the aqueous thermosetting resin composition is also included in the aqueous thermosetting resin composition of the present invention.

Further, the aqueous thermosetting resin composition of the present invention can also be used for a method of forming a multilayer coating film by aqueous/aqueous type wet-on-wet coating according to steps of first aqueous coating material coating → drying → second aqueous coating material coating → heat curing. In this case, the aqueous thermosetting resin composition of the present invention may be used in a first aqueous coating material, may be used in a second aqueous coating material, or may be used in both the coating materials. Further, a multilayer coating film having three or more layers may be formed by the same method.

Meanwhile, when the aqueous thermosetting resin composition of the present invention is used in the field of coating materials, it is required to have sufficient curing performance having performances such as smoothness, water resistance, and acid resistance.

On the other hand, in a case where the aqueous thermosetting resin composition is used in the fields of adhesives, pressure sensitive adhesives, and the like, high curing performance required for coating materials is not required. The aqueous thermosetting resin composition of the present invention can be configured to be usable as a coating material, but the aqueous thermosetting resin composition may be usable in the fields of adhesives, pressure sensitive adhesives, and the like even when it does not reach such a level.

The present invention is a cured film formed by three-dimensionally crosslinking the thermosetting resin composition described above.

Such a cured film has sufficient performance so that it can be used as a coating/adhesive.

The above-mentioned cured film also includes cured films formed by the above-mentioned multilayer coating film forming method.

The thermosetting resin composition of the present invention may be used in combination with other crosslinking agents that are generally used in the fields of coating materials and adhesives, in addition to the above-mentioned components. A crosslinking agent that can be used is not particularly limited, and examples thereof may include an isocyanate compound, a blocked isocyanate compound, a melamine resin, an epoxy resin, a silane compound, and the like. In addition, vinyl ether, an anionic polymerizable monomer, a cationic polymerizable monomer, a radical polymerizable monomer, and the like may be used in combination. A curing agent for accelerating reactions of these crosslinking agents used in combination may be used in combination.

### Examples

Hereinafter, the present disclosure will be explained with reference to examples. However, the present disclosure is not limited to these examples. In addition, "part (s) " means "part (s) by weight" in the examples.

### Synthesis Example 1

Ethylene glycol monoacetoacetate monomethacrylate 54 parts, 64 parts of t-butyl acrylate, 33 parts of potassium carbonate, 2 parts of 18-crown-6 ether and 97 parts of tetrahydrofuran were mixed and stirred at 50°C for 3 hours. After completion of the reaction, cyclohexane and water were added and washed with water. The organic layer was neutralized with a saturated aqueous solution of ammonium chloride and washed twice with water, and the obtained organic layer was concentrated under reduced pressure to obtain a monomer A.

### Synthesis Example 2

54 parts of ethylene glycol monoacetoacetate monomethacrylate, 43 parts of methyl acrylate, 33 parts of potassium carbonate, 2 parts of 18-crown-6 ether, and 97 parts of tetrahydrofuran were mixed and stirred at 50°C for 3 hours. After completion of the reaction, cyclohexane and water were added, and followed by washing with water. The organic layer was neutralized with a saturated aqueous solution of ammonium chloride and washed twice with water, and the obtained organic layer was concentrated under reduced pressure to obtain a monomer B.

### Synthesis Example 3

180 parts of succinic anhydride and 173 parts of methanol were placed in a four-necked flask to dissolve succinic anhydride at 60 to 70°C. It was confirmed by NMR that a peak of succinic anhydride had disappeared, and methanol was removed under reduced pressure at 60°C or higher to generate monomethyl succinate.

190 parts of monomethyl succinate, 205 parts of glycidyl methacrylate, triethylbenzylammonium chloride, and a polymerization inhibitor was added and reacted at 90°C for 10 hours or more to obtain a monomer C.

### Synthesis Example 4

90 parts of methyl chloroacetate, 130 parts of potassium carbonate, and 250 parts of dimethylformamide were mixed, and 78 parts of methacrylic acid was added dropwise to a mixed solution at 30 to 40°C. After completion of the dropwise addition, 8 parts of triethylamine was added and stirring was performed at 50°C for 4 hours. After completion of the reaction, the mixture was washed with 500 parts of water. 300 parts of toluene was added to the organic layer, and it was washed with 300 parts of water four times. The obtained organic layer was distilled under reduced pressure to obtain a monomer D.

### Synthesis Example 5

70 parts of sodium chloroacetate, 80 parts of methyl chloroacetate, 15 parts of triethylamine, and 166 parts of toluene were mixed and stirred at 80°C for 2 hours. Thereafter, 100 parts of potassium methacrylate was added and stirring was further performed at 80°C for 2 hours. After completion of the reaction, the mixture was washed with 300 parts of water four times. The obtained organic layer was concentrated under reduced pressure to obtain a monomer E.

### Synthesis Example 6

120 parts of 4-hydroxybutyl acrylate and 154 parts of succinic anhydride were mixed and stirred at 80°C for 8 hours to obtain a monomer F.

### Synthesis Example 7

40 parts of trimethylolpropane triacrylate, 55 parts of dimethyl malonate, 56 parts of potassium carbonate, 1.5 parts of 18-crown-6 ether and 95 parts of tetrahydrofuran were mixed and stirred at 50°C for 3 hours. After completion of the reaction, cyclohexane and water were added, and followed by washing with water. The organic layer was neutralized with a saturated aqueous solution of ammonium chloride and washed twice with water, and the obtained organic layer was concentrated under reduced pressure to obtain a crosslinking agent G.

### Synthesis Example 8

70 parts of the crosslinking agent G, 30 parts of a tridecyl ether EOPO adduct (a product manufactured by DKS Co., Ltd.: Neugen TDX-100D), and 30 parts of ion exchanged water were mixed, and emulsification was carried out for 1 hour at room temperature using a homomixer. Then, 120 parts of ion exchanged water was added to obtain a crosslinking agent liquid H.

### Synthesis Example 9

Triethylbenzylammonium chloride and a polymerization inhibitor were added to 190 parts of monomethyl succinate and 201.5 parts of trimethylolpropane triglycidyl ether (Kyoeisha Chemical Co., Ltd., Epolite 100MF), and the mixture was reacted at 90°C for 10 hours or more to obtain a crosslinking agent I.

### Synthesis Example 10

345 parts of n-butyl methacrylate (Kyoeisha Chemical Co., Ltd., Light Ester NB), 110 parts of hydroxyethyl methacrylate (Kyoeisha Chemical Co., Ltd., Light Ester HO-250), 30 parts of styrene, and 15 parts of a reactive emulsifier (DKS Co. Ltd. Aquaron KH-10) were mixed. Then, 200 parts of ion exchanged water was mixed with the obtained solution and emulsification was carried out for 1 hour at room temperature using a homomixer to prepare a monomer emulsion. 15 parts of ammonium peroxodisulfate and 10 parts of sodium bisulfite as an initiator were dissolved in ion exchanged water to prepare an initiator solution.

400 parts of ion exchanged water and 10 parts of isopropyl alcohol were placed in a stirrable flask, and a monomer solution and an initiator solution were added dropwise while nitrogen was enclosed to carry out polymerization. The polymerization temperature at this time was 80°C. The dropwise addition was carried out for 2 hours, and further aging was carried out at 80°C for 4 hours to obtain a polymer solution A.

### Synthesis Example 11

After 240 parts of n-butyl methacrylate (a product manufactured by Kyoeisha Chemical Co., Ltd., Light Ester NB), 105 parts of t-butyl acrylate (a product manufactured by Kyoeisha Chemical Co., Ltd., Light Acrylate TB), 110 parts of hydroxyethyl methacrylate (a product manufactured by Kyoeisha Chemical Co., Ltd., Light Ester HO-250), 30 parts of styrene, and 15 parts of a reactive emulsifier (a product manufactured by DKS Co., Ltd., Aqualon KH-10) were mixed, 200 parts of ion exchanged water was mixed and emulsification was performed at room temperature for 1 hour using a homomixer to prepare a monomer emulsified solution. 15 parts of ammonium peroxodisulfate and 10 parts of sodium bisulfite as initiators were dissolved in ion exchanged water to prepare an initiator solution.

400 parts of ion exchanged water and 10 parts of isopropyl alcohol were placed in a stirrable flask, and the monomer solution and the initiator solution were added dropwise while nitrogen was enclosed to carry out polymerization. The polymerization temperature at this time was 80°C. The dropwise addition was carried out for 2 hours, and further aging was carried out at 80°C for 4 hours to obtain a polymer solution B.

### Synthesis Example 12

240 parts of n-butyl methacrylate (a product manufactured by Kyoeisha Chemical Co., Ltd., Light Ester NB), 105 parts of the monomer A, 110 parts of hydroxyethyl methacrylate (a product manufactured by Kyoeisha Chemical Co., Ltd., Light Ester HO-250), 30 parts of styrene, and 15 parts of a reactive emulsifier (a product manufactured by DKS Co. Ltd., Aquaron KH-10) were mixed. Then, 200 parts of ion exchanged water was mixed with the obtained solution and emulsification was carried out for 1 hour at room temperature using a homomixer to prepare a monomer emulsion. 15 parts of ammonium peroxodisulfate and 10 parts of sodium bisulfite as initiators were dissolved in ion exchanged water to prepare an initiator solution.

400 parts of ion exchanged water and 10 parts of isopropyl alcohol were placed in a stirrable flask, and the monomer solution and the initiator solution were added dropwise while nitrogen was enclosed to carry out polymerization. The polymerization temperature at this time was 80°C. The dropwise addition was carried out for 2 hours, and further aging was carried out at 80°C for 4 hours to obtain a polymer solution C.

### Synthesis Example 13

240 parts of n-butyl methacrylate (Kyoeisha Chemical Co., Ltd., Light Ester NB), 105 parts of the monomer B, 110 parts of hydroxyethyl methacrylate (Kyoeisha Chemical Co., Ltd., Light Ester HO-250), 30 parts of styrene, and 15 parts of a reactive emulsifier (DKS Co. Ltd. Aquaron KH-10) were mixed. Then, 200 parts of ion exchanged water was mixed with the obtained solution and emulsification was carried out for 1 hour at room temperature using a homomixer to prepare a monomer emulsion. 15 parts of ammonium peroxodisulfate and 10 parts of sodium bisulfite as an initiator were dissolved in ion exchanged water to prepare an initiator solution.

400 parts of ion exchanged water and 10 parts of isopropyl alcohol were placed in a stirrable flask, and a monomer solution and an initiator solution were added dropwise while nitrogen was enclosed. The polymerization temperature at this time was 80°C. The dropwise addition was carried out for 2 hours, and further aging was carried out at 80°C for 4 hours to obtain a polymer solution D.

### Synthesis Example 14

After 240 parts of n-butyl methacrylate (Kyoeisha Chemical Co., Ltd., Light Ester NB), 72 parts of the monomer C, 72 parts of hydroxyethyl methacrylate (a product manufactured by Kyoeisha Chemical Co., Ltd., Light Ester HO-250), 96 parts of styrene, and 15 parts of a reactive emulsifier (a product manufactured by DKS Co., Ltd., Aqualon KH-10) were mixed, 144 parts of ion exchanged water was mixed and emulsification was performed at room temperature for 1 hour using a homomixer to prepare a monomer emulsion. 15 parts of 4,4'-azobis (4-cyanovaleric acid) as an initiator was dissolved in ion exchanged water to prepare an initiator solution.

750 parts of ion exchanged water and 50 parts of isopropyl alcohol were placed in a stirrable flask, and the monomer solution and the initiator solution were added dropwise while nitrogen was enclosed to carry out polymerization. The polymerization temperature at this time was 80°C. The dropwise addition was carried out for 2 hours, and further aging was carried out at 80°C for 4 hours to obtain a polymer solution E.

### Synthesis Example 15

After 240 parts of n-butyl methacrylate (Kyoeisha Chemical Co., Ltd., Light Ester NB), 72 parts of the monomer D, 72 parts of hydroxyethyl methacrylate (a product manufactured by Kyoeisha Chemical Co., Ltd., Light Ester HO-250), 96 parts of styrene, and 15 parts of a reactive emulsifier (a product manufactured by DKS Co., Ltd., Aqualon KH-10) were mixed, 144 parts of ion exchanged water was mixed and emulsification was performed at room temperature for 1 hour using a homomixer to prepare a monomer emulsion. 15 parts of 4,4'-azobis (4-cyanovaleric acid) as an initiator was dissolved in ion exchanged water to prepare an initiator solution.

750 parts of ion exchanged water and 50 parts of isopropyl alcohol were placed in a stirrable flask, and the monomer solution and the initiator solution were added dropwise while nitrogen was enclosed to carry out polymerization. The polymerization temperature at this time was 80°C. The dropwise addition was carried out for 2 hours, and further aging was carried out at 80°C for 4 hours to obtain a polymer solution F.

### Synthesis Example 16

After 240 parts of n-butyl methacrylate (Kyoeisha Chemical Co., Ltd., Light Ester NB), 72 parts of the monomer E, 72 parts of hydroxyethyl methacrylate (a product manufactured by Kyoeisha Chemical Co., Ltd., Light Ester HO-250), 96 parts of styrene, and 15 parts of a reactive emulsifier (a product manufactured by DKS Co., Ltd., Aqualon KH-10) were mixed, 144 parts of ion exchanged water was mixed and emulsification was performed at room temperature for 1 hour using a homomixer to prepare a monomer emulsion. 15 parts of 4,4'-azobis (4-cyanovaleric acid) as an initiator was dissolved in ion exchanged water to prepare an initiator solution.

750 parts of ion exchanged water and 50 parts of isopropyl alcohol were placed in a stirrable flask, and the monomer solution and the initiator solution were added dropwise while nitrogen was enclosed to carry out polymerization. The polymerization temperature at this time was 80°C. The dropwise addition was carried out for 2 hours, and further aging was carried out at 80°C for 4 hours to obtain a polymer solution G.

### Synthesis Example 17

355 parts of n-butyl methacrylate (Kyoeisha Chemical Co., Ltd., Light Ester NB), 115 parts of hydroxyethyl methacrylate (a product manufactured by Kyoeisha Chemical Co., Ltd., Light Ester HO-250), 30 parts of styrene, and 15 parts of acrylic acid were mixed as a monomer mixed solution, and 25 parts of 2,2'-azobis (2,4-dimethylvaleronitrile) (Wako Pure Chemical Industries, Ltd. V-65) as an initiator was dissolved in butyl glycol to prepare an initiator solution. 500 parts of butyl glycol was placed in a stirrable flask, and the monomer solution and the initiator solution were added dropwise while nitrogen was enclosed. The polymerization temperature at this time was 120°C. The dropwise addition was carried out for 2 hours, and further aging was carried out at 120°C for 4 hours to obtain a polymer solution H.

### Synthesis Example 18

245 parts of n-butyl methacrylate (Kyoeisha Chemical Co., Ltd., Light Ester NB), 110 parts of the monomer B, 115 parts of hydroxyethyl methacrylate (a product manufactured by Kyoeisha Chemical Co., Ltd., Light Ester HO-250), 30 parts of styrene, and 15 parts of acrylic acid were mixed as a monomer mixed solution, and 25 parts of 2,2'-azobis (2,4-dimethylvaleronitrile) (Wako Pure Chemical Industries, Ltd. V-65) as an initiator was dissolved in butyl glycol to prepare an initiator solution. 500 parts of butyl glycol was placed in a stirrable flask, and the monomer solution and the initiator solution were added dropwise while nitrogen was enclosed. The polymerization temperature at this time was 120°C. The dropwise addition was carried out for 2 hours, and further aging was carried out at 120°C for 4 hours to obtain a polymer solution I.

### Synthesis Example 19

100 parts of n-butyl methacrylate (Kyoeisha Chemical Co., Ltd., Light Ester NB), 150 parts of the monomer B, 125 parts of 4-hydroxybutyl acrylate, 125 parts of styrene, and 25 parts of methacrylic acid were mixed as a monomer mixed solution, and 15 parts of 1,1,3,3-tetramethylbutylperoxy-2-ethylhexanoate (Nippon Oil & Fats Co., Ltd., PEROCTA O) as an initiator was dissolved in butyl glycol to prepare an initiator solution. 525 parts of butyl glycol is placed in a stirrable flask, and the monomer solution and the initiator solution were added dropwise while nitrogen was enclosed. The polymerization temperature at this time was 100°C. The dropwise addition was carried out for 2 hours, and further aging was carried out at 100°C for 4 hours to obtain a polymer solution J.

### Synthesis Example 20

100 parts of n-butyl methacrylate (Kyoeisha Chemical Co., Ltd., Light Ester NB), 150 parts of the monomer B, 125 parts of 4-hydroxybutyl acrylate, 125 parts of styrene, and 65 parts of 2-methacryloyloxyethyl succinic acid (Kyoeisha Chemical Co., Ltd., Light ester HO-MS (N)) were mixed as a monomer mixed solution, and 15 parts of 1,1,3,3-tetramethylbutylperoxy-2-ethylhexanoate (Nippon Oil & Fats Co., Ltd., PEROCTA O) as an initiator was dissolved in butyl glycol to prepare an initiator solution. 565 parts of butyl glycol was placed in a stirrable flask, and the monomer solution and the initiator solution were added dropwise while nitrogen was enclosed. The polymerization temperature at this time was 100°C. The dropwise addition was carried out for 2 hours, and further aging was carried out at 100°C for 4 hours to obtain a polymer solution K.

### Synthesis Example 21

100 parts of n-butyl methacrylate (Kyoeisha Chemical Co., Ltd., Light Ester NB), 150 parts of the monomer D, 125 parts of 4-hydroxybutyl acrylate, 125 parts of styrene, and 65 parts of 2-methacryloyloxyethyl succinic acid (Kyoeisha Chemical Co., Ltd., Light ester HO-MS (N)) were mixed as a monomer mixed solution, and 15 parts of 1,1,3,3-tetramethylbutylperoxy-2-ethylhexanoate (Nippon Oil & Fats Co., Ltd., PEROCTA O) as an initiator was dissolved in butyl glycol to prepare an initiator solution. 525 parts of butyl glycol was placed in a stirrable flask, and the monomer solution and the initiator solution were added dropwise while nitrogen was enclosed. The polymerization temperature at this time was 100°C. The dropwise addition was carried out for 2 hours, and further aging was carried out at 100°C for 4 hours to obtain a polymer solution L.

### Synthesis Example 22

100 parts of n-butyl methacrylate (Kyoeisha Chemical Co., Ltd., Light Ester NB), 150 parts of the monomer E, 125 parts of 4-hydroxybutyl acrylate, 125 parts of styrene, and 65 parts of 2-methacryloyloxyethyl succinic acid (Kyoeisha Chemical Co., Ltd., Light ester HO-MS (N)) were mixed as a monomer mixed solution, and 15 parts of 1,1,3,3-tetramethylbutylperoxy-2-ethylhexanoate (Nippon Oil & Fats Co., Ltd., PEROCTA O) as an initiator was dissolved in butyl glycol to prepare an initiator solution. 525 parts of butyl glycol was placed in a stirrable flask, and the monomer solution and the initiator solution were added dropwise while nitrogen was enclosed. The polymerization temperature at this time was 100°C. The dropwise addition was carried out for 2 hours, and further aging was carried out at 100°C for 4 hours to obtain a polymer solution M.

### Synthesis Example 23

100 parts of n-butyl methacrylate (Kyoeisha Chemical Co., Ltd., Light Ester NB), 150 parts of the monomer C, 125 parts of 4-hydroxybutyl acrylate, 125 parts of styrene, and 65 parts of 2-methacryloyloxyethyl succinic acid (Kyoeisha Chemical Co., Ltd., Light ester HO-MS (N)) were mixed as a monomer mixed solution, and 15 parts of 1,1,3,3-tetramethylbutylperoxy-2-ethylhexanoate (Nippon Oil & Fats Co., Ltd., PEROCTA O) as an initiator was dissolved in butyl glycol to prepare an initiator solution. 525 parts of butyl glycol was placed in a stirrable flask, and the monomer solution and the initiator solution were added dropwise while nitrogen was enclosed. The polymerization temperature at this time was 100°C. The dropwise addition was carried out for 2 hours, and further aging was carried out at 100°C for 4 hours to obtain a polymer solution N.

### Synthesis Example 24

100 parts of n-butyl methacrylate (Kyoeisha Chemical Co., Ltd., Light Ester NB), 150 parts of the monomer B, 125 parts of 4-hydroxybutyl acrylate, 125 parts of styrene, and 70 parts of the monomer F were mixed as a monomer mixed solution, and 15 parts of 1,1,3,3-tetramethylbutylperoxy-2-ethylhexanoate (Nippon Oil & Fats Co., Ltd., PEROCTA O) as an initiator was dissolved in butyl glycol to prepare an initiator solution. 570 parts of butyl glycol was placed in a stirrable flask, and the monomer solution and the initiator solution were added dropwise while nitrogen was enclosed. The polymerization temperature at this time was 100°C. The dropwise addition was carried out for 2 hours, and further aging was carried out at 100°C for 4 hours to obtain a polymer solution O.

### Synthesis Example 25

250 parts of n-butyl methacrylate (Kyoeisha Chemical Co., Ltd., Light Ester NB), 125 parts of 4-hydroxybutyl acrylate, 125 parts of styrene, and 65 parts of 2-methacryloyloxyethyl succinic acid (Kyoeisha Chemical Co., Ltd., Light ester HO-MS (N)) were mixed as a monomer mixed solution, and 15 parts of 1,1,3,3-tetramethylbutylperoxy-2-ethylhexanoate (Nippon Oil & Fats Co., Ltd., PEROCTA O) as an initiator was dissolved in butyl glycol to prepare an initiator solution. 565 parts of butyl glycol was placed in a stirrable flask, and the monomer solution and the initiator solution were added dropwise while nitrogen was enclosed. The polymerization temperature at this time was 100°C. The dropwise addition was carried out for 2 hours, and further aging was carried out at 100°C for 4 hours to obtain a polymer solution P.

### Synthesis Example 26

225 parts of n-butyl methacrylate (Kyoeisha Chemical Co., Ltd., Light Ester NB), 150 parts of the monomer C, 125 parts of styrene, and 65 parts of 2-methacryloyloxyethyl succinic acid (Kyoeisha Chemical Co., Ltd.: Light ester HO-MS (N)) were mixed as a monomer mixed solution, and 15 parts of 1,1,3,3-tetramethylbutylperoxy-2-ethylhexanoate (Nippon Oil & Fats Co., Ltd., PEROCTA O) as an initiator was dissolved in butyl glycol to prepare an initiator solution. 565 parts of butyl glycol was placed in a stirrable flask, and the monomer solution and the initiator solution were added dropwise while nitrogen was enclosed. The polymerization temperature at this time was 100°C. The dropwise addition was carried out for 2 hours, and further aging was carried out at 100°C for 4 hours to obtain a polymer solution Q.

### Synthesis Example 27

100 parts of n-butyl methacrylate (Kyoeisha Chemical Co., Ltd., Light Ester NB), 150 parts of the monomer D, 125 parts of 4-hydroxybutyl acrylate, 125 parts of styrene, and 65 parts of 2-methacryloyloxyethyl succinic acid (Kyoeisha Chemical Co., Ltd.: Light ester HO-MS (N)) were mixed as a monomer mixed solution, and 15 parts of 1,1,3,3-tetramethylbutylperoxy-2-ethylhexanoate (Nippon Oil & Fats Co., Ltd., PEROCTA O) as an initiator was dissolved in butyl glycol to prepare an initiator solution. 565 parts of butyl glycol was placed in a stirrable flask, and the monomer solution and the initiator solution were added dropwise while nitrogen was enclosed. The polymerization temperature at this time was 100°C. The dropwise addition was carried out for 2 hours, and further aging was carried out at 100°C for 4 hours to obtain a polymer solution R.

### Synthesis Example 28

175 parts of n-butyl methacrylate (Kyoeisha Chemical Co., Ltd., Light Ester NB), 150 parts of the monomer D, 125 parts of 4-hydroxybutyl acrylate, and 50 parts of styrene were mixed as a monomer mixed solution, and 25 parts of 1,1,3,3-tetramethylbutylperoxy-2-ethylhexanoate (Nippon Oil & Fats Co., Ltd., PEROCTA O) as an initiator was dissolved in butyl acetate to prepare an initiator solution. 500 parts of butyl glycol was placed in a stirrable flask, and the monomer solution and the initiator solution were added dropwise while nitrogen was enclosed. The polymerization temperature at this time was 100°C. The dropwise addition was carried out for 2 hours, and further aging was carried out at 100°C for 4 hours to obtain a polymer solution S.

### Examples 1 to 34

Polymer solutions listed in tables were combined with other components in proportions listed in the tables to prepare aqueous thermosetting resin compositions.

Meanwhile, in a case where resin emulsions obtained by emulsion polymerization were used, aqueous thermosetting resin compositions were obtained by mixing the resin emulsions as they are with components shown in the tables. In a case where an aqueous thermosetting resin composition is obtained for a resin which is an organic solvent solution, the following steps can be performed.

### (Method of making resin solution of organic solvent aqueous)

After a polymer solution was neutralized with an amine compound shown in the tables, a catalyst and water were mixed to obtain a uniform solution.

For a catalyst having low solubility in water (for example, zinc oxide, MBTO), 100 parts of butyl glycol, 25 parts of a catalyst, and 100 parts of glass beads (manufactured by AIMEX Co., Ltd. AIMEX beads No. 1510) were mixed and were processed using a disperser (manufactured by LAU: DAS-H200K) for 30 minutes to obtain a catalyst dispersion. This catalyst dispersion was mixed with the polymer solution made aqueous to obtain a composition.

Meanwhile, regarding zinc acetate, after zinc acetate was dissolved in water, the polymer solution was added thereto to perform neutralization.

For each of aqueous thermosetting resin compositions shown in Tables 1 to 4, a coating film of 400 µm was prepared by WET using an applicator and was baked at 150°C for 30 minutes. Then, a gel fraction was measured.

Regarding the gel fraction, a film obtained in each example was dissolved in acetone reflux using Soxhlet for 30 minutes, and a residual weight% of the film was measured as the gel fraction.

A gel fraction of 0 to 40% was rated as × on the assumption that it was not possible to withstand practical use.

A gel fraction of 40 to 80% was rated as o on the assumption that it was possible to withstand practical use.

A gel fraction of 80 to 100% was rated as ⊚ on the assumption that performance was excellent.

**[Table 1]**

| | Comparative Example 1 | Example 1 | Example 2 | Example 3 | Example 4 | Example 5 | Example 6 | Example 7 |
|---|---|---|---|---|---|---|---|---|
| Polymer A | 100 | | | | | | | |
| Polymer B | | 100 | | | | | | |
| Polymer C | | | 100 | | | | | |
| Polymer D | | | | 100 | | | | |
| Polymer E | | | | | 100 | 100 | | |
| Polymer F | | | | | | | 100 | |
| Polymer G | | | | | | | | 100 |
| PHS | 1 | 1 | 1 | 1 | 1 | | 1 | 1 |
| zinc oxide | | | | | | 1.5 | | |
| Gel fraction/% | × | ⊚ | ⊚ | ⊚ | ⊚ | ⊚ | ⊚ | ⊚ |

**[Table 2]**

| | Comparative Example 2 | Example 8 | Example 9 | Example 10 | Example 11 | Example 12 | Example 13 | Example 14 | Example 15 | Example 16 | Example 17 |
|---|---|---|---|---|---|---|---|---|---|---|---|
| Polymer H | 100 | | | | | | | | | | |
| Polymer I | | 100 | 100 | 100 | | | | | | | |
| Polymer J | | | | | 100 | | | | | | |
| Polymer K | | | | | | 100 | | | | | 100 |
| Polymer L | | | | | | | 100 | | | | |
| Polymer M | | | | | | | | 100 | | | |
| Polymer N | | | | | | | | | 100 | | |
| Polymer O | | | | | | | | | | 100 | |
| AMP | 1.5 | 1.5 | 1.5 | 1.5 | 3.5 | 3.5 | 3.5 | 3.5 | 3.5 | 3.5 | 3.5 |
| Water | 10 | 10 | 10 | 10 | 10 | 10 | 10 | 10 | 10 | 10 | 10 |
| Zinc acrylate | 5 | 5 | | | | | | | | | |
| Ti catalyst | | | 4 | | | | | | | | |
| DBU | | | | 1.5 | | | | | | | |
| zinc acetate | | | | | 1.5 | 1.5 | 1.5 | 1.5 | 1.5 | 1.5 | |
| Zr(acac)4 | | | | | | | | | | | 1.5 |
| Gel fraction/% | × | ○ | ⊚ | ○ | ○ | ⊚ | ⊚ | ⊚ | ⊚ | ⊚ | ⊚ |

**[Table 3]**

| | Example 18 | Example 19 | Example 20 | Example 21 | Example 22 | Example 23 | Example 24 | Example 25 | Example 26 | Example 27 | Example 28 |
|---|---|---|---|---|---|---|---|---|---|---|---|
| Polymer N | 100 | 100 | 100 | 100 | 100 | 100 | 100 | 100 | 100 | 100 | 100 |
| 25% ammonia water | 3 | | | | | | | | | | |
| DMEA | | 3.5 | | | | | | | | | |
| TEA | | | 3.5 | 3.5 | 3.5 | 3.5 | 3.5 | 3.5 | 3.5 | 3.5 | 3.5 |
| Water | 10 | 10 | 10 | 10 | 10 | 10 | 10 | 10 | 10 | 10 | 10 |
| zinc acetate | 1.5 | 1.5 | 1.5 | | | | | | | | |
| Zn(acac)2 | | | | 1.5 | | | | | | | |
| zinc oxide | | | | | 1.5 | | | | | | |
| alumina | | | | | | 10 | | | | | |
| zirconium oxide | | | | | | | 5 | | | | |
| titanium oxide | | | | | | | | 10 | | | |
| TEBAC | | | | | | | | | 1.5 | | |
| Neostan U-820 | | | | | | | | | | 1.5 | |
| MBTO | | | | | | | | | | | 1.5 |
| Gel fraction/% | ⊚ | ⊚ | ⊚ | ⊚ | ⊚ | ⊚ | ⊚ | ⊚ | ⊚ | ⊚ | ⊚ |

**[Table 4]**

| | Example 29 | Example 30 | Example 31 | Example 32 | Example 33 | Example 34 |
|---|---|---|---|---|---|---|
| Polymer N | 50 | | | | | |
| Polymer P | | 50 | 100 | 100 | | |
| Polymer Q | | 50 | | | 100 | 100 |
| Crosslinking agent G | | | 6 | | | |
| Crosslinking agent liquid H | | | | 22 | | |
| Crosslinking agent I | 50 | | | | | |
| glycerin | | | | | 6 | |
| polyester polyol | | | | | | 25 |
| TEA | 3.5 | 3.5 | 3.5 | 3.5 | 3.5 | 3.5 |
| Water | 10 | 10 | 10 | 10 | 10 | 10 |
| Zinc acetate | 1.5 | 1.5 | 1.5 | 1.5 | 1.5 | 1.5 |
| Gel fraction/% | ⊚ | ⊚ | ⊚ | ⊚ | ⊚ | ○ |

Meanwhile, the components in the tables represent the following.
AMP: 2-amine-2-methyl-1-propanol
PHS: Phenolic sulfonic acid
Zinc acrylate: ZA-30 (a product manufactured by Asada Chemical Industry Co., Ltd.) 30% product
Ti catalyst: tetrakis (2,4-pentanedionato) titanium (IV) 63% product
DBU: 1,8-diazabicyclo [5.4.0] undesen-7 (a product manufactured by San Apro Co., Ltd.) DMEA: dimethylethanolamine
TEA: triethylamine
Zn (acac) 2: Zinc acetylacetonate
TEBAC: triethylbenzylammonium chloride
Neostan U-820 (Nitto Kasei Co., Ltd., trade name): dioctyl tin diacetate
MBTO: monobutyltin oxide
Polyester polyol: a product manufactured by Kuraray Co., Ltd., Kuraray polyol F-3010

From the results in Tables 2 to 4 described above, it is apparent that the aqueous thermosetting resin compositions of the present invention have sufficient thermosetting performance.

### (Preparation of clear coating material)

Each clear coating material was obtained by mixing raw materials in proportions shown in Table 5.

### Examples 35 to 43 Formation of multilayer coating film according to wet-on-wet method

Each base coating material was applied by an applicator so that the base coating material has a film thickness of 20 µm after drying on a dull steel plate having a thickness of 0.8 mm and then was preheated at 80°C for 10 minutes. Each clear coating material was applied on the coating film by a wet-on-wet method so as to have a film thickness of 40 µm after drying, and after a setting time of 10 minutes, the clear coating material was baked at 150°C for 30 minutes to form a clear coat coating film. Coating film condition evaluation, a xylene rubbing resistance test, and an acid resistance test were performed on the obtained coating films. Combinations of the coating materials of the examples and coating film evaluation results are shown in Table 5 (results of wet-on-wet). Meanwhile, a pigment-dispersed paste was prepared by a method described below.

A pigment-dispersed paste was prepared by adding 100 parts of glass beads (particle size 1.5 to 2.0 mm) to a mixture of 17 parts of a black pigment (carbon black: Raven 5000UIII), 100 parts of water, 8.5 parts of a dispersant (a product manufactured by Kyoeisha Chemical Co., Ltd.: Floren GW-1500), and 0.6 parts of a defoamer (a product manufactured by Kyoeisha Chemical Co., Ltd., Aqualen HS-01) and followed by dispersing by a round shaker for 2 hours.

In addition, the coating film evaluations in the table 5 were performed by the following methods.

Coating film condition
The surface condition of the baked coating film was visually observed.
⊚: Glossy and smooth
o: Little orange peel is seen
Δ: Orange peel and foaming are seen, and there is no gloss
×: There are no gloss and severe surface defects including unevenness, orange peel, and foaming

### Xylene rubbing

The coated plate after baking was rubbed 10 times with a pharmaceutical gauze impregnated with xylene. After the xylene was dried, the surface condition was visually observed.
⊚: No change at all
○: Slightly scratched
△: Slightly dissolved
×: whitened and dissolved surface

### Acid resistance test

A 40% sulfuric acid aqueous solution was dropped on the coated plate after baking, left at 60°C for 1 hour, and then the sulfuric acid solution was wiped off, and the surface was polished lightly with an abrasive to observe the state.
⊚: No change at all
○: Slightly outline of sulfuric acid was seen
△:Deteriorated and whitened coating film
×:Decomposition of the coating film, which clearly eroded into the inside of the coating film

**[Table 5]**

| | | Example 35 | Example 36 | Example 37 | Example 38 | Example 39 | Example 40 |
|---|---|---|---|---|---|---|---|
| Water-based coat | Pigment -dispersed paste | 20 | 20 | 20 | 20 | 20 | 20 |
| | Polymer N | 80 | 80 | 80 | | | 80 |
| | Polymer R | | | | 80 | 80 | |
| | TEA | 6 | 3 | 3 | 3 | 3 | 6 |
| | Water | 92 | 92 | 92 | 92 | 92 | 92 |
| | Zinc acetate | 1.2 | | | | | 1.2 |
| | Zinc oxide | | 1.2 | | | | |
| Clear | Polymer N | 100 | 100 | 100 | | | |
| | Polymer S | | | | 100 | 90 | |
| | Crosslinking agent G | | | | | 10 | |
| | Zn(acac)2 | 1.5 | 1.5 | 1.5 | 1.5 | 1.5 | |
| | TOPO | | | | 1.5 | 1.5 | |
| Coating film physical properties | Coating film condition | ⊚ | ⊚ | ⊚ | ⊚ | ⊚ | ⊚ |
| | Xylene rubbing | ⊚ | ⊚ | ⊚ | ⊚ | ⊚ | ⊚ |
| | Acid resistance | ⊚ | ⊚ | ⊚ | ⊚ | ⊚ | - |

| | | | | | | | |
|---|---|---|---|---|---|---|---|
| TOPO: trioctylphosphine oxide | | | | | | | |

From the results of Table 5 described above, in a case where a multilayer coating film is formed by a wet-on-wet method using each of the aqueous thermosetting resin compositions of the present invention as a water-based coating material, the coating film can be formed satisfactorily. In such a multilayer coating film, a coating film having satisfactory performance can be obtained by using a thermosetting resin composition using a transesterification reaction in both a water-based coating material and a solvent-based clear coating material.

### (Industrial Applicability)

The aqueous thermosetting resin composition of the present invention can be used as various coating compositions, adhesive compositions, and pressure sensitive adhesive compositions.

## Claims

1. An aqueous thermosetting resin composition comprising:
a resin component (A) that has -COOR (R is an alkyl group having 50 or less carbon atoms) and a hydroxyl group and a transesterification catalyst (B).

2. The aqueous thermosetting resin composition according to claim 1,
wherein the resin component is a mixture of a compound (A-1) having two or more -COOR (R is an alkyl group having 50 or less carbon atoms) groups and a compound (A-2) having a hydroxyl group.

3. The aqueous thermosetting resin composition according to claim 1,
wherein the resin component has a compound (A-3) having one or more -COOR (R is an alkyl group having 50 or less carbon atoms) groups and one or more hydroxyl groups as a portion or the entirety thereof.

4. The aqueous thermosetting resin composition according to claim 1, 2, or 3, wherein the resin component further has:
at least one functional group selected from the group consisting of a carboxylic acid group, a sulfonic acid group, a sulfate group, and a phosphate group which are neutralized with amine and/or ammonia.

5. The aqueous thermosetting resin composition according to claim 1,
wherein the transesterification catalyst (B) is at least one compound selected from the group consisting of a metal compound containing metals other than alkali metal, and a basic catalyst.

6. A multilayer coating film forming method comprising:
a step (I) of coating a material to be coated with a first coating composition which is the aqueous thermosetting resin composition according to any one of claims 1 to 5;
a step (II) of coating an uncured coating film formed by the step (I) with a second coating composition; and
a step (III) of performing heat curing on a multilayer coating film formed by the steps (I) and (II).

7. A cured film which is formed by three-dimensionally crosslinking the thermosetting resin composition according to claim 1, 2, 3, 4, 5, or 6.

8. A cured film formed by the multilayer coating film forming method according to claim 6.
